# EUROPEAN PATENT APPLICATION

(11) **EP 4 593 180 A1**
(43) Date of publication of application: **30.07.2025**
(21) Application number: 23915808.2
(22) Date of filing: 26.12.2023
(51) Int. Cl.: H01M 50/30

(54) **ENERGY STORAGE SYSTEM AND ELECTRIC APPARATUS**

(30) Priority: 10.01.2023 CN 202310031062; 08.12.2023 CN 202323352171 U
(71) Applicant: Huawei Digital Power Technologies Co., Ltd., Shenzhen, Guangdong 518043 (CN)
(72) Inventor: LI, Weiguo, Shenzhen, Guangdong 518043 (CN); LI, Limou, Shenzhen, Guangdong 518043 (CN); FAN, Guohua, Shenzhen, Guangdong 518043 (CN); ZHANG, Xuechao, Shenzhen, Guangdong 518043 (CN); YU, Tao, Shenzhen, Guangdong 518043 (CN); ZHANG, Huan, Shenzhen, Guangdong 518043 (CN); ZHU, Jing, Shenzhen, Guangdong 518043 (CN)
(74) Representative: Isarpatent
(86) International application number: PCT/CN2023/141855
(87) International publication number: WO 2024/149055

(57) **Abstract**

This application provides an energy storage system and a power-consuming apparatus. The energy storage system may include a box and a battery module, where the battery module is disposed in the box. The battery module includes electrochemical cells, a module housing, a partition plate, and an air conduit. The electrochemical cells are disposed in the module housing, and the module housing has a first mounting hole. The partition plate is disposed in the module housing, the partition plate divides the module housing into a heat dissipation cavity and a smoke exhaust cavity, and the air conduit communicates with the smoke exhaust cavity by using the first mounting hole. In addition, an exhaust vent may be further disposed on the box, and the air conduit communicates with the exhaust vent. In this way, smoke generated by thermal runaway of the electrochemical cells may enter the air conduit through the first mounting hole of the module housing, and then be discharged to the outside of the box through the exhaust vent. An explosion proof design of the energy storage system has good response timeliness, and can effectively reduce a risk of ignition and explosion of the energy storage system, thereby improving use safety of the energy storage system.

## Description

### TECHNICAL FIELD

This application relates to the field of energy storage technologies, and in particular, to an energy storage system and a power-consuming apparatus.

### BACKGROUND

Electrochemical energy storage is widely used in industrial and commercial parks, office buildings, or the like. In consideration of arrangement flexibility, a battery, a battery management system (BMS), a power conversion system (power conversion system, PCS), a power distribution system, a fire extinguishing system, and the like may be usually integrated into a cabinet and disposed outdoors. In this way, when an energy storage system is delivered to the site, the energy storage system can be connected to a grid for running with only a few cables.

However, thermal runaway may occur on a battery in the energy storage system due to mechanical, electrical, and thermal abuse, a defect of the battery, and the like. In a thermal runaway process, complex chemical and physical reactions occur on electrolyte, positive and negative electrode materials, or a separator inside the battery, thereby generating a large amount of flammable gas and releasing the flammable gas to a cabinet. When encountering a spark or a high temperature, the flammable gas ignites and explodes in relatively enclosed space. Debris generated by cabinet disintegration caused by the ignition and the explosion may splash and injure people. In addition, a shock wave, thermal radiation, and the like generated by the ignition and the explosion threaten personal safety of personnel around the cabinet.

Based on this, an explosion proof design may be performed for the energy storage system, to improve use safety of the energy storage system.

### SUMMARY

This application provides an energy storage cabinet and a power-consuming apparatus, to reduce a risk of ignition and explosion of the energy storage cabinet by designing an exhaust flue for flammable smoke in the energy storage cabinet, thereby improving use safety of the energy storage cabinet.

According to a first aspect, this application provides an energy storage cabinet. The energy storage cabinet may include a box and a battery module during specific disposing. The battery module may be disposed in the box, and the battery module may include a module housing and an electrochemical cell disposed in the module housing. A partition plate may be further disposed on the battery module, the partition plate may be disposed in the module housing, and the partition plate may divide a cavity of the module housing into a heat dissipation cavity and a smoke exhaust cavity. In addition, the battery module may further include an air conduit, and the module housing may have a first mounting hole. In this way, the air conduit may communicate with the smoke exhaust cavity by using the first mounting hole. An exhaust vent may be disposed on the box, and the air conduit may further communicate with the exhaust vent. Therefore, when thermal runaway occurs on the electrochemical cell, smoke generated by the electrochemical cell may be discharged to the smoke exhaust cavity, so that the smoke enters the air conduit through the first mounting hole of the module housing, and then is discharged to the outside of the box through the exhaust vent. An explosion proof design of the energy storage cabinet has good response timeliness, and can effectively reduce a risk of ignition and explosion of the energy storage cabinet, thereby improving use safety of the energy storage cabinet.

Because the module housing is divided into the heat dissipation cavity and the smoke exhaust cavity by the partition plate, when the electrochemical cell is specifically disposed in the module housing, the electrochemical cell may include a body, and the body may be disposed in the heat dissipation cavity. In this application, an ingress protection rating of the heat dissipation cavity may be relatively low. Therefore, an air cooling system may be used as a cooling system of the battery module, thereby implementing heat dissipation of the body of the electrochemical cell.

**In** addition, the electrochemical cell may further include a tab and an pressure relief valve. The tab and the pressure relief valve of the electrochemical cell may be disposed on the body, and the tab and the pressure relief valve of the electrochemical cell may penetrate the partition plate or even the smoke exhaust cavity. In this way, smoke generated by the electrochemical cell during thermal runaway may be discharged to the smoke exhaust cavity in a directional manner through the pressure relief valve of the electrochemical cell, and be discharged to the outside of the box through the exhaust vent by using the air conduit. This can effectively improve response timeliness of discharging the smoke from the electrochemical cell and the battery module, thereby reducing a risk of ignition and explosion of the energy storage cabinet.

It may be understood that, in this application, the smoke exhaust cavity may also be used as a connection cavity of the tab, so that a connection operation between the tab and another mechanical part may be performed in the smoke exhaust cavity.

To enable the tab and the pressure relief valve of the electrochemical cell to extend from the partition plate to the smoke exhaust cavity, avoidance holes may be disposed on the partition plate, and a tab of each electrochemical cell and an pressure relief valve of the electrochemical cell may extend to the smoke exhaust cavity through a corresponding avoidance hole.

Because a plurality of electrochemical cells may be generally disposed in the battery module, in a possible implementation, the avoidance holes may be disposed in one-to-one correspondence with the electrochemical cells, that is, one avoidance hole is disposed for each electrochemical cell. In this case, the tab of each electrochemical cell and the pressure relief valve of the electrochemical cell may extend to the smoke exhaust cavity through a same avoidance hole, thereby effectively simplifying a structure of the partition plate.

To prevent smoke generated by the electrochemical cells from overflowing into the box, the energy storage cabinet may further include sealing elements, the sealing elements may be disposed in one-to-one correspondence with the electrochemical cells, and each sealing element may be disposed around a tab of a corresponding electrochemical cell and an pressure relief valve of the electrochemical cell. In addition, the sealing element may further abut against a body of the corresponding electrochemical cell and the partition plate, so that the sealing element fills a gap between the body of the electrochemical cell and the partition plate. In this implementation of this application, a specific form of the sealing element is not limited. For example, the sealing element may be a sealing ring or dispensed glue.

In addition to the foregoing manner of disposing the avoidance hole of the partition plate, in another possible implementation of this application, one avoidance hole may be disposed on the partition plate to separately correspond to each tab of each electrochemical cell and the pressure relief valve of each electrochemical cell, so that each tab and the pressure relief valve of each electrochemical cell extend to the smoke exhaust cavity respectively through correspondingly disposed avoidance holes. In this implementation, the sealing elements may be disposed in one-to-one correspondence with the avoidance holes. In this way, each first sealing ring may be disposed around a corresponding tab or an pressure relief valve of a corresponding electrochemical cell, and each first sealing ring may abut against a body of the corresponding electrochemical cell and the partition plate, so that the sealing element fills a gap between the body of the electrochemical cell and the partition plate. In this implementation of this application, a specific form of the sealing element is not limited. For example, the sealing element may be a sealing ring or dispensed glue.

In this application, the energy storage cabinet may further include a smoke exhaust pipe. The smoke exhaust pipe may be located between the air conduit and the exhaust vent, and the smoke exhaust pipe may communicate with the air conduit and the exhaust vent. By disposing the smoke exhaust pipe, a chimney effect may be formed, so that smoke generated by the electrochemical cell due to thermal runaway is discharged from the smoke exhaust cavity to the smoke exhaust pipe through the air conduit in a directional manner, and then is discharged to the outside of the box through the exhaust vent. This can effectively reduce a risk of ignition and explosion of the energy storage cabinet, thereby improving use safety of the energy storage cabinet.

When the smoke exhaust pipe is specifically enabled to communicate with the air conduit, a second mounting hole may be disposed on the smoke exhaust pipe, and the second mounting hole is disposed to face the air conduit, so that communication between the smoke exhaust pipe and the air conduit is implemented through communication between the air conduit and the second mounting hole.

To improve sealing of a joint between the air conduit and the smoke exhaust pipe, a sealing element may be further disposed between the air conduit and the smoke exhaust pipe. The sealing element may be disposed around the second mounting hole, and the air conduit may press the sealing element against the smoke exhaust pipe, so that the sealing element fills a gap between the air conduit and the smoke exhaust pipe. In this application, a specific type of the sealing element is not limited. For example, the sealing element may be a sealing ring.

In addition, a limiting frame may be further disposed on the smoke exhaust pipe, the sealing element may be sheathed on an outer circumferential side of the limiting frame, and the air conduit may abut against the limiting frame. In this way, when the air conduit presses the second sealing ring against the smoke exhaust pipe, a compression rate of the second sealing ring that is performed by the air conduit may be limited by using the limiting frame, so that damage to the sealing element may be avoided, thereby improving reliability of sealing between the air conduit and the smoke exhaust pipe.

In this application, a material of the limiting frame is not limited. For example, the limiting frame may be made of a high-temperature-resistant material such as a mica plate or an epoxy plate.

The air conduit may communicate with the smoke exhaust cavity by using the first mounting hole, and the air conduit may communicate with the smoke exhaust pipe by using the second mounting hole. Based on this, to enable smoke to be discharged from the module housing to the smoke exhaust pipe through the air conduit in a directional manner, an pressure relief valve may be further disposed on the battery module. The pressure relief valve of the battery module may be mounted in the first mounting hole or the second mounting hole. This is not specifically limited in this application.

When the smoke exhaust pipe is specifically enabled to communicate with the exhaust vent, an exhaust hole may be disposed on the smoke exhaust pipe, and there may be a plurality of exhaust holes. In addition, the exhaust hole may communicate with the exhaust vent of the box, so that smoke may be discharged to the outside of the box through the smoke exhaust pipe.

**In** addition, in consideration of a rainproof design of the smoke exhaust pipe, in this application, the exhaust hole may be disposed as a shutter hole, or a ventilation shutter may be mounted outside the exhaust hole.

In the foregoing implementation, the smoke exhaust pipe may be an independent structure. In another possible implementation, the smoke exhaust pipe may alternatively form an integrated structure with the box, so that a structure of the energy storage cabinet may be simplified. It may be understood that, when the smoke exhaust pipe and the box are an integrated structure, the exhaust hole of the smoke exhaust pipe may be used as the exhaust vent of the box. In other words, this solution can avoid a communication operation between the exhaust hole and the exhaust vent, effectively simplify an assembly process of the energy storage cabinet, and reduce a risk of smoke overflowing into the box.

**In** this application, for the battery module that generates high heat when a fault occurs or that has spark splashing when a fault occurs, a fire retardant cooling apparatus may be further disposed inside the air conduit. Specifically, a fire retardant cooling apparatus provided in this application may include a plurality of baffle plates. The plurality of baffle plates are disposed in a staggered manner in a direction of discharging smoke, and can effectively prevent spark overflow, thereby reducing a risk of ignition and explosion. Another fire retardant cooling apparatus provided in this application may include a plurality of spherical particles, and a material of the spherical particle may be but is not limited to magnesium carbonate or the like. In this way, a fire retardant layer may be formed by using a gap between the particles, and a heat absorption surface area may be effectively increased, thereby achieving an objective of fire retardant cooling. Another fire retardant cooling apparatus provided in this application may include a plurality of stacked steel wire meshes, and mesh holes of two adjacent steel wire meshes are different, so that a fire retardant gap is formed through stacking of the steel wire meshes with different mesh holes. In addition, heat insulation foam may be further disposed between two adjacent steel wire meshes, to achieve an effect of fire retardant cooling.

In a possible implementation, the energy storage cabinet includes a box, a box door is disposed on the box, the box door is disposed parallel to a rear wall of the box, the box is configured to accommodate a plurality of stacked battery modules and a smoke exhaust pipe, the smoke exhaust pipe is disposed between the rear wall and the plurality of battery modules, and the smoke exhaust pipe extends along a stacking direction of the plurality of battery modules. A plurality of smoke intake vents, a smoke exhaust vent, and an air vent are disposed on the smoke exhaust pipe. Both the smoke exhaust vent and the air vent communicate with an external environment of the energy storage cabinet. A position of the smoke exhaust vent on the smoke exhaust pipe is higher than a position of the air vent. The plurality of smoke intake vents are spaced apart along the stacking direction of the plurality of battery modules, an pressure relief valve is disposed on an outer wall that is of at least some battery modules in the plurality of battery modules and that faces the smoke exhaust pipe, a sealing element is disposed between the pressure relief valve and the smoke intake vent, the sealing element includes two ends that are disposed parallel to each other along a direction of a spacing between the rear wall and the box door, an opening at one end of the sealing element covers an outer circumference of the pressure relief valve, and an opening at the other end of the sealing element covers an outer circumference of the smoke intake vent.

When thermal runaway occurs on the battery module, the pressure relief valve of the battery module is opened, and high-temperature gas inside the battery module is released to the smoke exhaust pipe through an opening of the pressure relief valve on the outer wall of the battery module and the smoke intake vent, and then is discharged to the external environment through the smoke exhaust vent of the smoke exhaust pipe. There may be a gap between the outer wall of the battery module and a side wall on which the smoke intake vent is located. Therefore, a sealing element is disposed between the battery module and the smoke intake vent, to form a sealing structure between the outer wall of the battery module and the smoke exhaust pipe. High-temperature gas generated by a battery module due to thermal runaway can enter a corresponding smoke intake vent in a directional manner, so that the high-temperature gas released by the battery module can be prevented from spreading inside a battery compartment, thereby preventing thermal runaway from spreading to another battery module to cause thermal runaway of the entire energy storage cabinet, and improving safety performance of the energy storage cabinet. **In** addition, the smoke exhaust vent and the air vent are disposed on the smoke exhaust pipe, and a height of the position of the smoke exhaust vent is higher than a height of the position of the air vent. Therefore, smoke released by the battery module may be released to the external environment through the smoke exhaust vent under a chimney effect, and electrolyte released by the battery module may be released to the outside through the air vent. **In** addition, the air vent and the smoke exhaust vent can maintain balance of atmospheric pressure inside the smoke exhaust pipe, and ensure exchange between gas inside the smoke exhaust pipe and gas outside the smoke exhaust pipe.

In a possible implementation, the smoke exhaust channel includes two side walls disposed parallel to each other, one side wall is disposed parallel to the outer wall of the battery module, and the other side wall is located between the one side wall and the rear wall. The plurality of smoke intake vents are disposed on the one side wall, the plurality of smoke intake vents are spaced apart along the stacking direction of the plurality of battery modules, the plurality of smoke intake vents one-to-one correspond to the plurality of battery modules, and the smoke exhaust vent is disposed on the other side wall. The plurality of battery modules one-to-one correspond to the plurality of smoke intake vents, so that high-temperature smoke released when thermal runaway occurs on the battery module may be discharged into the smoke exhaust pipe through a corresponding smoke exhaust vent in a directional manner, to prevent thermal runaway from spreading to another battery module.

In a possible implementation, there is a gap between the other side wall and the rear wall, and the gap is filled with a flame retardant material. When thermal runaway occurs on the battery module, the flame retardant material may isolate the rear wall from the smoke exhaust pipe filled with high-temperature gas, to prevent the entire energy storage cabinet from catching fire.

In a possible implementation, a lower edge of the smoke exhaust vent is higher than an upper edge of a top smoke intake vent in the plurality of smoke intake vents, so that the chimney effect during smoke discharging can be better used to release smoke to the external environment as soon as possible.

In a possible implementation, a plurality of exhaust holes are disposed in a partial region of the rear wall, and an orthographic projection of the partial region in the direction of the spacing between the rear wall and the box door covers an orthographic projection of the smoke exhaust vent in the direction of the spacing between the rear wall and the box door. In other words, at least some of the plurality of exhaust holes are disposed opposite to the smoke exhaust vent. When smoke is released to a gap between the smoke exhaust pipe and the rear wall through the smoke exhaust vent, the smoke may be released to the external environment through the plurality of exhaust holes as soon as possible.

In a possible implementation, a first baffle plate is disposed between the rear wall and the other side wall, and an orthographic projection of the first baffle plate in the direction of the spacing between the rear wall and the box door at least covers orthographic projections of the plurality of exhaust holes in the direction of the spacing between the rear wall and the box door. This prevents external foreign matter and accumulated water from entering the energy storage cabinet through the plurality of exhaust holes, thereby improving safety and reliability of the energy storage cabinet.

In a possible implementation, a second baffle plate is disposed at the smoke exhaust vent, and there is a partially overlapping region between orthographic projections of the first baffle plate and the second baffle plate in the direction of the spacing between the rear wall and the box door. This prevents external rainwater and foreign matter from entering the energy storage cabinet from a plurality of angles.

In a possible implementation, the first baffle plate is fastened to a top wall of the box and inclined towards the rear wall, and the second baffle plate is fastened to the lower edge of the smoke exhaust vent and inclined towards the rear wall. The first baffle plate and the second baffle plate form a maze baffle structure. On the one hand, when the energy storage cabinet performs directional smoke discharging, resistance of the first baffle plate and the second baffle plate to smoke is relatively small, and a smoke exhaust effect of the energy storage cabinet is not affected. On the other hand, when external rainwater enters, the first baffle plate and the second baffle plate block rainwater from different angles, thereby implementing all-round protection, and improving reliability and safety of the energy storage cabinet.

In a possible implementation, the first baffle plate is disposed parallel to the rear wall, a plurality of through holes are disposed on the first baffle plate, and the plurality of through holes do not overlap the plurality of exhaust holes. On the one hand, when thermal runaway occurs on the battery module, smoke can be discharged through the through holes in a timely manner. On the other hand, when external rainwater enters, the first baffle plate can block the rainwater to some extent.

In a possible implementation, the smoke exhaust pipe includes a bottom wall, the two side walls are perpendicular to the bottom wall, second sealing elements are disposed between the bottom wall and bottom surfaces that are of the two side walls and that face the bottom wall, the air vent is disposed on the bottom wall, and the air vent is located between the two second sealing elements. The air vent is located on the bottom wall between the two second sealing elements, and can discharge accumulated water and electrolyte inside the smoke exhaust pipe to the external environment in a timely manner.

In a possible implementation, the one side wall includes a plurality of protrusion parts that face the outer wall of each battery module, hollow structures are disposed in the protrusion parts, the smoke intake vent is disposed on each protrusion part, and a sum of a height of the protrusion part and a thickness of the sealing element is greater than or equal to a height that is of the pressure relief valve and that protrudes from the outer wall of the battery module. A circumferential edge of the protrusion part abuts against the other end of the sealing element. The protrusion part and the sealing element jointly form a smoke intake channel between the side wall and the outer wall of the battery module. The protrusion part is designed to better adapt to pressure relief valves that are of different models of battery modules and that have different heights, thereby improving flexibility of the energy storage cabinet and enriching application scenarios.

In a possible implementation, the smoke exhaust pipe includes a side wall, the side wall is located between the rear wall and the outer wall of the battery module, the plurality of smoke intake vents are disposed on the side wall, and the smoke exhaust vent is disposed on the rear wall. The rear wall of the box may serve as a side wall of the smoke exhaust pipe, and the smoke exhaust vent of the smoke exhaust pipe is directly disposed on the rear wall of the box. This solution can avoid a communication operation between the smoke exhaust vent and the exhaust hole of the box, effectively simplify an assembly process of the energy storage cabinet, and reduce a risk of smoke overflowing into the box.

In a possible implementation, a baffle plate is disposed between the smoke exhaust vent and the side wall, and an included angle between the baffle plate and the side wall is an acute angle. The baffle plate can block entry of external foreign matter or rainwater to some extent, so that the external foreign matter or the rainwater falls vertically along the baffle plate and the smoke exhaust pipe, thereby preventing the external foreign matter or the rainwater from attaching to the pressure relief valve of the battery module through the smoke intake vent.

In a possible implementation, the side wall is perpendicular to a bottom wall of the smoke exhaust pipe, a second sealing element is disposed between the bottom wall and a bottom surface that is of the side wall and that faces the bottom wall, the air vent is disposed on the bottom wall, and the air vent is located between the rear wall and the second sealing element. This further improves sealing between the smoke exhaust pipe and the box.

In a possible implementation, the rear wall is perpendicular to a bottom wall of the smoke exhaust pipe, and the air vent is disposed in a region above a junction between the rear wall and the bottom wall. The air vent may be used to discharge accumulated water and electrolyte, and maintain balance of atmospheric pressure inside the smoke exhaust pipe when the energy storage cabinet performs directional smoke discharging.

In a possible implementation, the smoke exhaust pipe includes a top wall, a bottom wall, and a side wall, the bottom wall and the top wall are disposed parallel to each other, the bottom wall and the top wall intersect with the side wall, the side wall is disposed parallel to the outer wall of the battery module, the plurality of smoke intake vents are disposed on the side wall, the smoke exhaust vent is disposed on the top wall, and the air vent is disposed on the bottom wall. High-temperature smoke released when thermal runaway occurs on the battery module is discharged to the external environment through the smoke exhaust vent on the top wall, and released electrolyte or accumulated water in the smoke exhaust pipe may be discharged to the external environment through the air vent on the bottom wall.

In a possible implementation, the other end of the sealing element includes an inner wall and an outer wall that are disposed opposite to each other, the inner wall is disposed to face the smoke intake vent, and a lower edge of the inner wall of the sealing element and a lower edge of the smoke intake vent are on a same horizontal plane, or a lower edge of the inner wall of the sealing element is higher than a lower edge of the smoke intake vent. When external rainwater enters, the rainwater may slide from the inner wall of the sealing element to the smoke exhaust pipe, and then be discharged to the external environment through the air vent, thereby preventing accumulated water from causing sealing failure of the sealing element, and improving reliability of the energy storage cabinet.

According to a second aspect, this application further provides a power-consuming apparatus. The power-consuming apparatus may include power-consuming equipment and the energy storage cabinet in the first aspect. The power-consuming equipment is electrically connected to the energy storage cabinet, and the energy storage cabinet may be configured to supply power to the power-consuming equipment. An explosion proof design of the energy storage cabinet of the power-consuming apparatus has good response timeliness, and can effectively reduce a risk of ignition and explosion of the energy storage cabinet, thereby improving use safety of the energy storage cabinet, and improving use safety of the power-consuming apparatus.

According to a third aspect, this application provides an energy storage system. The energy storage system includes the energy storage cabinet in the first aspect and a power converter. The power converter is configured to convert an alternating current output by an external alternating current power supply into a direct current and output the direct current to the energy storage cabinet, and/or the power converter is configured to convert a direct current output by the energy storage cabinet into an alternating current and output the alternating current to a load or a power grid.

According to a fourth aspect, this application provides a directional smoke exhaust assembly for an energy storage apparatus. The energy storage apparatus includes a plurality of battery modules, the directional smoke exhaust assembly includes a smoke exhaust pipe, a plurality of smoke intake vents are disposed on the smoke exhaust pipe, and the plurality of battery modules one-to-one correspond to the plurality of smoke intake vents. An pressure relief valve is disposed on each battery module in the plurality of battery modules, and after the pressure relief valve of each battery module is opened, each battery module communicates with the smoke exhaust pipe. When thermal runaway occurs on the battery module, the pressure relief valve of the battery module is opened, and high-temperature gas inside the battery module is released to the smoke exhaust pipe through an opening of the pressure relief valve on the outer wall of the battery module and the smoke intake vent, and then is discharged to the external environment through the smoke exhaust vent of the smoke exhaust pipe. Because the battery modules are disposed in one-to-one correspondence with the smoke intake vents, high-temperature gas generated by a battery module due to thermal runaway can enter a corresponding smoke intake vent in a directional manner, so that the high-temperature gas released by the battery module can be prevented from spreading inside a battery compartment, thereby preventing thermal runaway from spreading to another battery module to cause thermal runaway of the entire energy storage cabinet, and improving safety performance of the energy storage cabinet.

### BRIEF DESCRIPTION OF DRAWINGS

FIG. 1 is a diagram of an application scenario of an energy storage cabinet according to an embodiment of this application;
FIG. 2 is a diagram of a structure of an energy storage cabinet according to an embodiment of this application;
FIG. 3 is a diagram of a structure of an energy storage cabinet according to another embodiment of this application;
FIG. 4 is a top view of the energy storage cabinet shown in FIG. 2;
FIG. 5 is a diagram of a structure of a partition plate according to an embodiment of this application;
FIG. 6 is an enlarged view of a partial structure at a position A of the energy storage cabinet shown in FIG. 2;
FIG. 7a to FIG. 7c are diagrams of a structure of a fire retardant cooling apparatus according to an embodiment of this application;
FIG. 8a to FIG. 8c are diagrams of a structure of a smoke exhaust pipe according to an embodiment of this application;
FIG. 9 is a diagram of a structure of an energy storage cabinet according to another embodiment of this application;
FIG. 10 is a top view of the energy storage cabinet shown in FIG. 9;
FIG. 11 is a diagram of a structure of an energy storage cabinet according to another embodiment of this application;
FIG. 12 is a diagram of a structure of an energy storage cabinet according to another embodiment of this application;
FIG. 13 is a diagram of a structure of an energy storage cabinet according to another embodiment of this application;
FIG. 14 is a sectional view of a structure of an energy storage cabinet in a side view direction according to an embodiment of this application;
FIG. 15 is a sectional view of a structure of an energy storage cabinet in a front view direction according to an embodiment of this application;
FIG. 16 is a diagram of a structure of an energy storage cabinet according to an embodiment of this application;
FIG. 17 to FIG. 19 are enlarged diagrams of a structure at a position A in FIG. 16;
FIG. 20 is an enlarged diagram of a structure at a position B in FIG. 16;
FIG. 21 is another sectional view of a structure of an energy storage cabinet in a side view direction according to an embodiment of this application;
FIG. 22 is an enlarged diagram of a structure at a position C in FIG. 21;
FIG. 23 is an enlarged diagram of a structure at a position D in FIG. 21;
FIG. 24 is a diagram of a structure of a smoke exhaust pipe of an energy storage cabinet according to an embodiment of this application; and
FIG. 25 is an enlarged diagram of a structure at a position E in FIG. 24.

Reference numerals:
1: box; 101: exhaust vent; 2: battery module; 201: module housing; 2011: heat dissipation cavity; 2012: smoke exhaust cavity;
2013: first mounting hole; 202: electrochemical cell; 2021: pressure relief valve of an electrochemical cell; 2022: body; 2023: tab;
203: pressure relief valve of a battery module; 204: partition plate; 2041: avoidance hole; 205: sealing element; 206: air conduit;
2061: baffle plate; 2062: spherical particle; 2063: steel wire mesh; 3: cooling system; 4: smoke exhaust pipe;
401: second mounting hole; 402: sealing element; 403: limiting frame; 404: exhaust hole; 405: connection part; 5: protective cover;
100: photovoltaic module; 200: direct current/direct current converter; 300: energy storage cabinet; 400: direct current/alternating current converter; 500: power grid; 600: industrial park;
310: box; 311: rear wall; 312: left cabinet wall; 313: right cabinet wall; 315: base; 3111: exhaust hole;
320 (3201): battery pack; 321: outer wall; and
330: smoke exhaust pipe; 3301: bottom wall; 3302: top wall; 3303: third side wall; 3304: fourth side wall; 331: smoke intake vent; 332: smoke exhaust vent; 333: sealing element; 334: first side wall; 3341: sealing component; 3343: first part; 3344: second part; 3345: third part; 335: second side wall; 336: first baffle plate; 337: second baffle plate; 3371: first bent part; 3372: second bent part; 3373: third bent part; 3374: fourth bent part; 339: air vent; 3342: baffle plate; 3346: protrusion part.

### DESCRIPTION OF EMBODIMENTS

To make the objectives, technical solutions, and advantages of this application clearer, the following further describes this application in detail with reference to accompanying drawings.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly.

Reference to "an embodiment", "a specific embodiment", or the like described in this specification means that one or more embodiments of this application include a specific feature, structure, or characteristic described with reference to this embodiment. The terms "include", "have", and their variants all mean "include but are not limited to", unless otherwise specifically emphasized in another manner.

For ease of understanding an energy storage cabinet provided in embodiments of this application, the following first describes an application scenario of the energy storage cabinet. The energy storage cabinet is a system that can store electric energy through a medium and release the stored energy to generate electricity when needed. The energy storage cabinet may be used as a load balancing apparatus and a backup power supply in a scenario such as an industrial and commercial park or a large-scale ground power supply station. The energy storage cabinet may be electrically connected to power-consuming equipment, to supply power to the power-consuming equipment. Based on different requirements for electricity consumption in application scenarios, energy storage cabinets may be classified into module-level energy storage cabinets, cabinet-level energy storage cabinets, and container-level energy storage cabinets.

The following embodiments of this application provide an energy storage cabinet. The energy storage cabinet may be used in an energy storage application scenario of new energy power generation such as photovoltaic power generation.

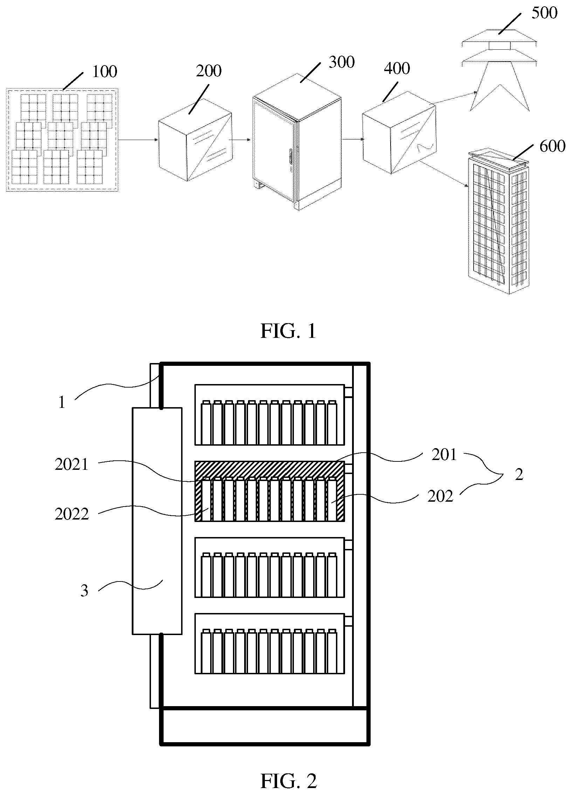

For example, FIG. 1 is a diagram of a framework structure of a photovoltaic system. As shown in FIG. 1, the photovoltaic system includes a photovoltaic module 100, a direct current/direct current converter 200, an energy storage cabinet 300, and a direct current/alternating current converter 400. The photovoltaic module 100 is configured to convert solar energy into direct current electric energy. The direct current/direct current converter 200 is configured to convert a direct current generated by the photovoltaic module 100 into an adjustable direct current, and is configured to dynamically control the direct current generated by the photovoltaic module 100, balance output power of each photovoltaic module 100, and then output the direct current to the energy storage cabinet 200 to store electric energy. A direct current output by the energy storage cabinet 300 is converted into an alternating current by using the direct current/alternating current converter 400, and the alternating current is output to a power grid 500. The alternating current output by the direct current/alternating current converter may be further used to supply power to an industrial park 600, to meet an electricity demand of the industrial and commercial park 600.

The energy storage cabinet 300 includes a plurality of battery packs, and the battery pack may also be referred to as a battery module. The battery pack generally includes a plurality of batteries. In actual application, thermal runaway may occur on a battery in a working process due to mechanical, electrical, and thermal abuse, a defect of the battery, and the like. When temperatures of the plurality of batteries are not uniform or the batteries are overcharged or overdischarged, a large amount of flammable gas is generated inside the batteries due to thermal runaway, and the flammable gas has a relatively high risk of ignition and explosion. A shock wave and thermal radiation generated by the ignition and the explosion and debris splashing caused by cabinet disintegration threaten safety of nearby people or objects. The battery pack also has a risk of opening a valve due to thermal runaway. When encountering a spark or a high-temperature surface, flammable gas such as H₂ and CO released when the valve is opened may cause an explosion accident in a relatively enclosed environment inside the cabinet, causing an injury to a surrounding environment or people. If high-temperature smoke cannot be discharged in a timely manner, the high-temperature flammable smoke gathers inside the battery pack or is discharged into an energy storage apparatus through a pressure relief valve of the battery pack. When the high-temperature flammable smoke gathers inside the battery pack, the battery pack may explode due to insufficient strength of the battery pack. When the high-temperature flammable smoke is directly released into the energy storage apparatus, the high-temperature flammable smoke impacts a surrounding battery pack that normally works, causing a secondary hazard.

Currently, a medium used to store electric energy in an energy storage cabinet is mostly a battery module, and thermal runaway may occur on the battery module in a working process due to mechanical, electrical, and thermal abuse, a defect of the battery module, and the like. In a thermal runaway process, a large amount of flammable gas is generated in the battery module, and the flammable gas has a relatively high risk of ignition and explosion. A shock wave and thermal radiation generated by the ignition and the explosion and debris splashing caused by cabinet disintegration threaten safety of nearby people or objects.

To improve use safety of the energy storage cabinet, a plurality of explosion proof designs of the energy storage cabinet are currently proposed in this field. Three elements for occurrence of ignition and explosion may be usually a combustible, comburant, and an ignition source. Based on this, a type of explosion proof design is proposed to reduce a concentration of the combustible. Generally, flammable gas in the energy storage cabinet is discharged by actively starting an exhaust fan, to avoid accumulation, ignition, and explosion of the flammable gas in the energy storage cabinet. In addition, in addition to reducing a concentration of the flammable gas by using an active exhaust method, the concentration of the flammable gas may also be reduced by releasing an inert medium, to increase a lower limit of ignition and explosion of the flammable gas.

Another type of explosion proof design is proposed to reduce a concentration of the comburant. Generally, an inert medium such as heptafluoropropane, perfluorohexanone, or fine water mist is sprayed to reduce the concentration of the comburant, so that an oxygen concentration inside the energy storage cabinet is reduced to an ultimate oxygen concentration of ignition and explosion of the flammable gas.

Still another type of explosion proof design is proposed to reduce the ignition source. Generally, a battery module mounting region is physically isolated from another electrical region, to prevent a hot spot or an arcing point from occurring on a non-battery module component during thermal runaway of the battery module to cause ignition and explosion in a battery module room. In addition, for a component that needs to be mounted in the battery module room, an explosion proof component may be used to prevent ignition and detonation of the ignition source when the component runs in a flammable gas atmosphere.

However, the foregoing explosion proof designs all have defects. For example, in the explosion proof design proposed to reduce the concentration of the combustible, there is a delay in startup of the exhaust fan, mainly because active exhaust startup needs a trigger condition. Generally, a flammable gas detector or a smoke detector is mounted inside the energy storage cabinet. When the battery module becomes faulty and generates gas or smoke, it takes some time for the gas or the smoke to spread to a position of the detector, and the detector needs a response time. In addition, when the detector detects a fault signal, there is also an action delay in startup of the exhaust fan. In this way, a delay from fault occurrence to startup of the exhaust fan is at least in minutes. In addition to the delay in startup of the exhaust fan, fresh air may be introduced in an exhaust process. In this case, when an open flame occurs inside the energy storage cabinet, introduction of the fresh air intensifies fire spreading. Alternatively, when no open flame occurs inside the energy storage cabinet, but if there is an ignition source when flammable gas is continuously generated, the introduced fresh air may cause ignition and explosion. In addition, an exhaust design in this design solution is complex and has limited effectiveness. This is because an electrochemical cell thermal runaway fault mainly generates gas such as hydrogen (H₂), carbon monoxide (CO), methane (CH4), carbon dioxide (CO₂), and an electrolyte vapor cloud. Composition of the gas is complex. Density of some gas components is lower than density of air, density of some gas components is equivalent to the density of air, and density of some gas components is higher than the density of air. This requires a detailed design of a proper runner to ensure effectiveness of flammable gas discharging. In addition, a rate at which gas is generated during thermal runaway of the battery module is high, and there are many battery modules in the energy storage cabinet. To ensure effective exhaust, an exhaust air volume needs to be increased. Therefore, a large exhaust fan needs to be used, or a quantity of fans needs to be increased. This increases design costs of the energy storage cabinet. In addition, reliability of an exhaust system cannot be guaranteed. This is because the exhaust system is used only when the battery module in the energy storage cabinet experiences a thermal runaway fault and generates gas. Based on a reliability bathtub curve, it can be learned that the energy storage cabinet is prone to a safety accident in early and late stages of running. If a safety accident occurs in the late stage of running, it is difficult to ensure that the exhaust system can still work reliably in a late stage of an entire life cycle of the energy storage cabinet, especially when the energy storage cabinet is often deployed in an unattended place.

For another example, in the explosion proof design proposed to reduce the concentration of the comburant, an inert time is short, and effectiveness is limited. This is because the energy storage cabinet has limited air tightness. According to the fire extinguishing standard NFPA2001 of the United States, an inert time of a fire extinguishing agent needs to be not less than 10 minutes. In addition, a battery module fault of the energy storage cabinet has a spreading risk. When the battery module continuously generates gas, an inert effect inside the battery module continuously fails.

In addition, in the explosion proof design proposed to reduce the ignition source, the energy storage cabinet has a complex design and a high cost. This is because the battery module room cannot be designed to be in a region that is completely separated from another device. A power connection, a signal cable, a sensor component, and the like of the battery module need to be coupled to the battery module. In addition, the explosion proof component is large in size and expensive, which is not conducive to promotion and application of the energy storage cabinet.

The energy storage cabinet provided in this application is intended to resolve the foregoing problem. A flue is designed in the energy storage cabinet, so that flammable smoke generated when a thermal runaway fault occurs on a battery module is guided to the outside of the energy storage cabinet by using an internal-external pressure difference. To facilitate understanding of the energy storage cabinet provided in embodiments of this application, the following describes a specific structure of the energy storage cabinet in detail with reference to the accompanying drawings.

Refer to FIG. 2. FIG. 2 is a diagram of a structure of an energy storage cabinet according to an embodiment of this application. The energy storage cabinet may include a box 1 and a battery module 2. There may be one or more battery modules 2, and the one or more battery modules 2 may be disposed in the box 1. For example, in the energy storage cabinet shown in FIG. 2, four battery modules 2 may be disposed in the box 1, and the four battery modules 2 are disposed side by side. In a normal use state of the energy storage cabinet, the box 1 of the energy storage cabinet may be generally placed along a gravity direction or along a direction that forms a relatively small included angle with the gravity direction. Therefore, in this application, a placement direction of the box 1 may be referred to as a vertical direction.

In this application, the battery module 2 may include a module housing 201 and an electrochemical cell 202. Each battery module 2 may include one or more electrochemical cells 202, and the one or more electrochemical cells 202 may be accommodated in the module housing 201. The electrochemical cell 202 is a main energy storage component of the battery module 2, and the thermal runaway described above usually occurs on the electrochemical cell 202. When the electrochemical cell 202 generates smoke due to thermal runaway, pressure inside the electrochemical cell 202 increases. To enable the smoke inside the electrochemical cell 202 to be discharged, an pressure relief valve 2021 of the electrochemical cell may be generally disposed on the electrochemical cell 202.

In addition, the electrochemical cell 202 may have a body 2022, and the pressure relief valve 2021 of the electrochemical cell may be mounted on the body 2022. Because a technology of using an pressure relief valve on the electrochemical cell 202 is relatively mature, details are not described herein. In this way, when the smoke generated due to thermal runaway makes the inside of the electrochemical cell 202 reach specific pressure, the pressure relief valve 2021 of the electrochemical cell may be opened, so that the smoke can be discharged into the module housing 201, to relieve the pressure in the electrochemical cell 202.

To enable the energy storage cabinet to efficiently run, a cooling system 3 may be generally further disposed in the energy storage cabinet, and the cooling system 3 may be configured to dissipate heat for a heat emitting device such as the battery module 2 in the energy storage cabinet. The cooling system 3 of the energy storage cabinet may be a liquid cooling system or an air cooling system. For different cooling systems 3, there are different requirements for an ingress protection rating of the battery module 2. For example, generally, in an energy storage cabinet in which the liquid cooling system is used as the cooling system 3, the ingress protection rating of the battery module 2 is generally above IP65; and in an energy storage cabinet in which the air cooling system is used as the cooling system 3, the ingress protection rating of the battery module 2 is generally IP2X.

Based on this, it may be understood that, in the energy storage cabinet in which the liquid cooling system is used as the cooling system 3, the ingress protection rating of the battery module 2 is relatively high, that is, the module housing 201 of the battery module 2 has relatively good sealing. In this way, when the smoke generated by the electrochemical cell 202 due to thermal runaway is continuously discharged into the module housing 201, pressure in the module housing 201 increases. To avoid damage to the module housing 201 caused by excessively high pressure in the module housing 201, pressure in the battery module 2 also needs to be relieved. Therefore, in this application, an pressure relief valve (not shown in FIG. 2) of the battery module may be further disposed on the battery module 2, and the pressure relief valve of the battery module may be disposed in the module housing 201. Because a technology of using an pressure relief valve on the battery module 2 is relatively mature, details are not described herein. In this way, when the smoke emitted by the electrochemical cell 202 into the module housing 201 makes the inside of the module housing 201 reach specific pressure, the pressure relief valve 203 of the battery module may be opened.

In this application, to prevent the smoke generated due to thermal runaway from being directly released into the box 1, an exhaust vent (not shown in FIG. 2) may be disposed on the box 1. In this way, the module housing 201 may communicate with the exhaust vent by using the pressure relief valve 203 of the battery module, so that the smoke discharged through the pressure relief valve 203 of the battery module may be discharged to the outside of the box 1 through the exhaust vent.

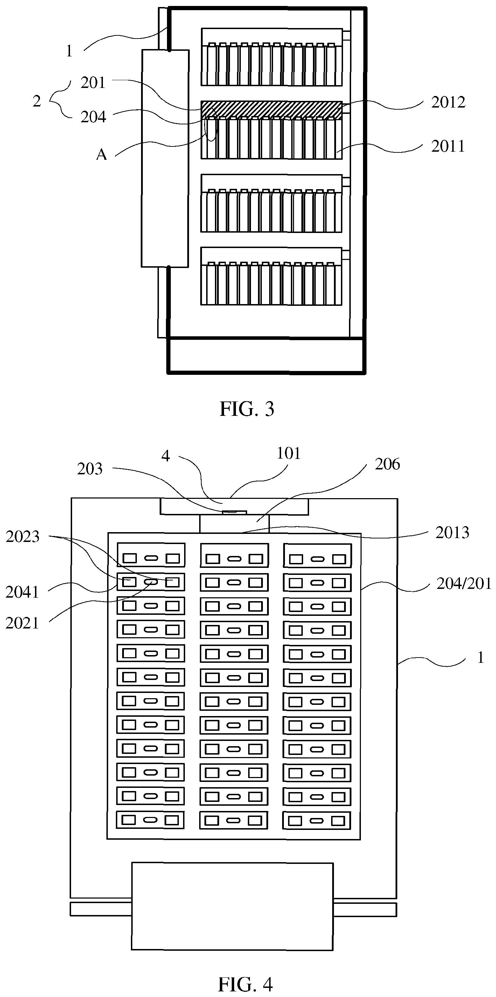

It can be learned from the foregoing description of the cooling system 3 of the energy storage cabinet that, when the air cooling system is used as the cooling system 3 of the energy storage cabinet, because wind generated by the air cooling system needs to be used to dissipate heat for the heat emitting device such as the battery module 2, a requirement for sealing of the module housing 201 of the battery module 2 is relatively low. To prevent the smoke generated in the electrochemical cell 202 from spreading to the box 1 under an action of the air cooling system, in a possible embodiment of this application, the module housing 201 may be divided into two parts, one part is used for heat dissipation, and the other part may be used for discharging smoke. During specific implementation, refer to FIG. 3. FIG. 3 is a diagram of a structure of an energy storage cabinet according to another embodiment of this application. In this embodiment, the battery module 2 may further include a partition plate 204, the partition plate 204 may be disposed in a cavity of the module housing 201, and the partition plate 204 may divide the cavity of the module housing 201 into a heat dissipation cavity 2011 and a smoke exhaust cavity 2012. It may be understood that the smoke exhaust cavity 2012 may communicate with the exhaust vent, so that smoke in the smoke exhaust cavity 2012 may be discharged through the exhaust vent on the box 1.

In addition, still refer to FIG. 3. In addition to the body 2022, the electrochemical cell 202 may further include a tab (not shown in FIG. 3). Generally, each electrochemical cell 202 may include two tabs, which are respectively a first tab and a second tab. The first tab may be a positive tab, and the second tab may be a negative tab. Alternatively, the first tab is a negative tab, and the second tab is a positive tab. This is not specifically limited in this application.

In the embodiment shown in FIG. 3, the body 2022 of the electrochemical cell 202 may be disposed in the heat dissipation cavity 2011, and an ingress protection rating of the heat dissipation cavity 2011 may be relatively low, so that heat generated in the heat dissipation cavity 2011 may be taken away by using wind generated by the air cooling system, to dissipate heat for the battery module. In addition, the tab of the electrochemical cell 202 and the pressure relief valve 2021 of the electrochemical cell may penetrate the partition plate 204 to extend to the smoke exhaust cavity 2012. In this way, on the one hand, smoke generated by the electrochemical cell 202 during thermal runaway may enter the smoke exhaust cavity 2012 through the pressure relief valve 2021 of the electrochemical cell, and then be discharged to the outside of the box 1 through the smoke exhaust cavity 2012. On the other hand, the smoke exhaust cavity 2012 may also be used as a connection cavity of the tab, so that a connection operation between the tab and another mechanical part may be performed in the smoke exhaust cavity 2012.

To enable the tab and the pressure relief valve 2021 of the electrochemical cell to penetrate the partition plate 204 to extend to the smoke exhaust cavity 2012, refer to FIG. 4. FIG. 4 is a top view of the energy storage cabinet shown in FIG. 3. An avoidance hole 2041 may be disposed on the partition plate 204, and the tab 2023 and the pressure relief valve 2021 of the electrochemical cell may penetrate the avoidance hole 2041 to extend to the smoke exhaust cavity 2012.

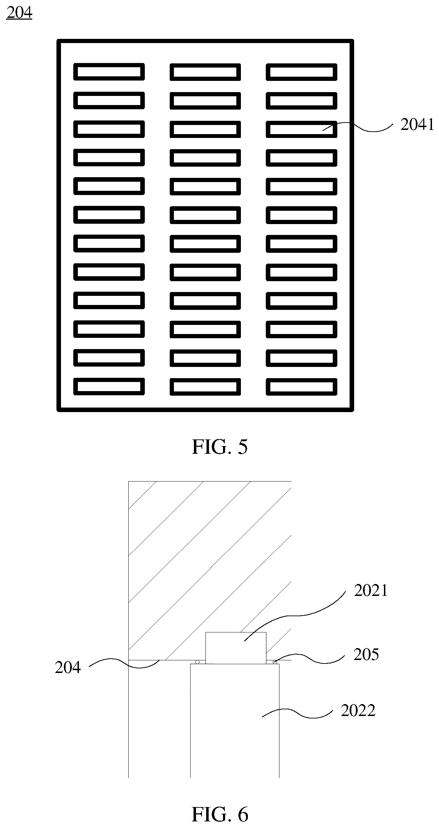

It can be learned from the foregoing description of the structure of the battery module 2 that the battery module 2 may include a plurality of electrochemical cells 202. Based on this, a plurality of avoidance holes 2041 may be disposed on the partition plate 204, and the avoidance holes 2041 are disposed in one-to-one correspondence with the electrochemical cells 202. In this case, for a structure of the partition plate 204, refer to FIG. 5. That is, the pressure relief valve 2021 and the two tabs of each electrochemical cell 202 may both penetrate a same avoidance hole 2041 to extend to the smoke exhaust cavity 2012.

When the avoidance holes 2041 are disposed in one-to-one correspondence with the electrochemical cells 202, to prevent the smoke emitted by the electrochemical cell 202 into the smoke exhaust cavity 2012 through the pressure relief valve 2021 of the electrochemical cell from spreading to the heat dissipation cavity 2011, in a possible embodiment of this application, a sealing element 205 may be disposed between the partition plate 204 and a surface that is of the body 2022 of the electrochemical cell 202 and that faces the partition plate 204. During specific implementation, refer to FIG. 6. FIG. 6 is an enlarged view of a partial structure at a position A of the energy storage cabinet shown in FIG. 3. It can be seen from FIG. 6 that, for each electrochemical cell 202, one sealing element 205 may be correspondingly disposed, and the sealing element 205 may be disposed around both the pressure relief valve 2021 and the two tabs of the corresponding electrochemical cell 202, that is, the pressure relief valve 2021 and the two tabs of each electrochemical cell 202 are located in a closed zone formed by the sealing element 205 through enclosure.

In addition, each sealing element 205 may be located between the body 2022 of the corresponding electrochemical cell 202 and the partition plate 204, and each sealing element 205 may abut against the partition plate 204 and a surface that is of the body 2022 of the corresponding electrochemical cell 202 and that faces the partition plate 204. In this application, the abutting may mean that two mechanical parts are in contact but do not have extrusion pressure, or may mean that two mechanical parts are in contact and have extrusion pressure. A specific form of the sealing element 205 is not limited in this application. For example, the sealing element 205 may be a sealing ring made of a material such as rubber, or may be dispensed glue.

To enable the pressure relief valve 2021 and the two tabs of the electrochemical cell 202 to penetrate the partition plate 204 to extend to the smoke exhaust cavity 2012, in addition to the disposing manner of the partition plate 204 shown in FIG. 5, in another possible embodiment of this application, when the avoidance hole 2041 is disposed on the partition plate 204, one avoidance hole 2041 may be disposed to separately correspond to each tab and the pressure relief valve 2021 of each electrochemical cell, so that each tab and the pressure relief valve 2021 of each electrochemical cell respectively penetrate corresponding avoidance holes 2041 to extend to the smoke exhaust cavity 2012.

It may be understood that, in this embodiment, a disposing manner of the sealing element 205 also needs to be accordingly adjusted. During specific implementation, one sealing element 205 may be disposed to separately correspond to each tab and the pressure relief valve 2021 of each electrochemical cell. Each sealing element 205 may be disposed around the corresponding tab or the corresponding pressure relief valve 2021 of the electrochemical cell, and each sealing element 205 may abut against the partition plate 204 and a surface that is of the body 2022 of the corresponding electrochemical cell 202 and that faces the partition plate 204. In addition, in this embodiment, the sealing element 205 may also be a sealing ring made of a material such as rubber, or may be dispensed glue. This is not specifically limited in this application.

It can be learned from the foregoing description that, to enable the smoke in the module housing 201 to be discharged, the module housing 201 may be enabled to communicate with the exhaust vent 101 on the box 1. In a possible embodiment of this application, to facilitate communication between the module housing 201 and the exhaust vent 101 on the box 1, still refer to FIG. 4. The battery module 2 may further include an air conduit 206, and the air conduit 206 may be disposed on the module housing 201. A first mounting hole 2013 may be disposed on the module housing 201. In this case, the air conduit 206 may communicate with the smoke exhaust cavity 2012 by using the first mounting hole 2013, and the air conduit 206 may be connected to the pressure relief valve 203 of the battery module. In addition, the air conduit 206 may further communicate with the exhaust vent 101, so that the air conduit 206 can export smoke in the battery module 2.

It should be noted that, in this application, the air conduit 206 may be an independent structure, and may be fastened to the module housing 201 in a manner not limited to welding, bonding, or riveting. Alternatively, the air conduit 206 and the module housing 201 may be an integrated structure, that is, the air conduit 206 may be a part of the module housing 201. In this way, a structure of the battery module may be simplified, and air tightness of the module housing 201 is better.

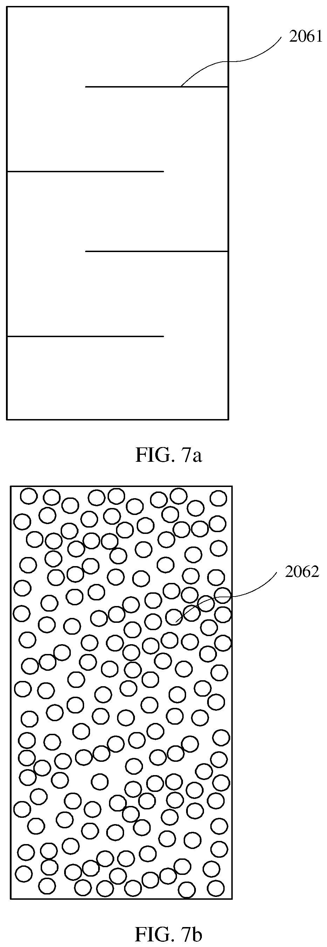

In a possible embodiment of this application, for the battery module 2 that generates high heat when a fault occurs or that has spark splashing when a fault occurs, a fire retardant cooling apparatus may be further disposed inside the air conduit 206. During specific implementation, refer to FIG. 7a. FIG. 7a shows a possible fire retardant cooling apparatus according to this application. The fire retardant cooling apparatus includes a plurality of baffle plates 2061. The plurality of baffle plates 2061 are disposed in a staggered manner in a direction of discharging smoke, and can effectively prevent spark overflow, thereby reducing a risk of ignition and explosion.

Refer to FIG. 7b. FIG. 7b shows another possible fire retardant cooling apparatus according to this application. The fire retardant cooling apparatus includes a plurality of spherical particles 2062, and a material of the spherical particle 2062 may be but is not limited to magnesium carbonate or the like. In this way, a fire retardant layer may be formed by using a gap between the particles, and a heat absorption surface area may be effectively increased, thereby achieving an objective of fire retardant cooling.

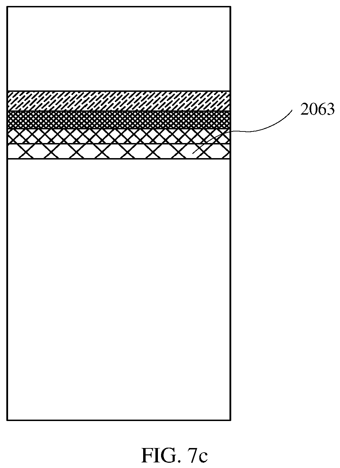

In addition, refer to FIG. 7c. FIG. 7c shows another possible fire retardant cooling apparatus according to this application. The fire retardant cooling apparatus may include a plurality of stacked steel wire meshes 2063, and mesh holes of two adjacent steel wire meshes 2063 are different, so that a fire retardant gap is formed through stacking of the steel wire meshes 2063 with different mesh holes. In addition, in this embodiment, heat insulation foam may be further disposed between two adjacent steel wire meshes 2063, to achieve an effect of fire retardant cooling.

The foregoing several fire retardant cooling apparatuses are merely some example descriptions provided in this application. To achieve the objective of fire retardant cooling, in some other possible embodiments of this application, other possible solutions may alternatively be used, which are not listed one by one herein, but should be understood as falling within the protection scope of this application.

In this application, the energy storage cabinet may further include a smoke exhaust pipe 4. The following uses the energy storage cabinet shown in FIG. 4 as an example to describe a specific manner of disposing the smoke exhaust pipe 4 in the energy storage cabinet. Smoke exhaust pipes 4 of energy storage cabinets provided in other embodiments may be disposed with reference to FIG. 4. The smoke exhaust pipe 4 may be used as a channel for discharging smoke from the module housing 201 to the outside of the box 1. During specific implementation, the smoke exhaust pipe 4 may be located between the air conduit 206 and the exhaust vent 101, and the smoke exhaust pipe 4 communicates with the air conduit 206 and the exhaust vent 101.

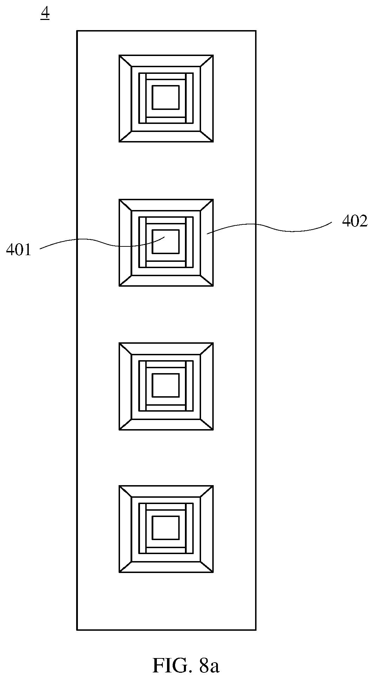

In addition, when the smoke exhaust pipe 4 is specifically disposed, refer to FIG. 8a. FIG. 8a is a diagram of a structure of a smoke exhaust pipe 4 according to an embodiment of this application. A second mounting hole 401 may be disposed on the smoke exhaust pipe 4. In this case, the air conduit 206 shown in FIG. 4 may communicate with the smoke exhaust pipe 4 by using the second mounting hole 401.

It can be learned from the foregoing description that the air conduit 206 may communicate with the module housing 201 by using the first mounting hole 2013, and the air conduit 206 is connected to the pressure relief valve 203 of the battery module. Based on this, it may be understood that, in this embodiment of this application, the pressure relief valve 203 of the battery module may be mounted in the first mounting hole 2013 or the second mounting hole 401, so that flexibility of mounting the pressure relief valve 203 of the battery module may be effectively improved.

In this application, to improve air tightness at a joint between the air conduit 206 and the smoke exhaust pipe 4, still refer to FIG. 8a. A sealing element 402 may be further disposed on the smoke exhaust pipe 4, and the sealing element 402 is disposed around the second mounting hole 401. In this way, when the air conduit 206 is connected to the smoke exhaust pipe 4, the air conduit 206 may press the sealing element 402 against the smoke exhaust pipe 4, so that the joint between the air conduit 206 and the smoke exhaust pipe 4 is sealed by compressing the sealing element 402, to prevent smoke from overflowing into the box 1.

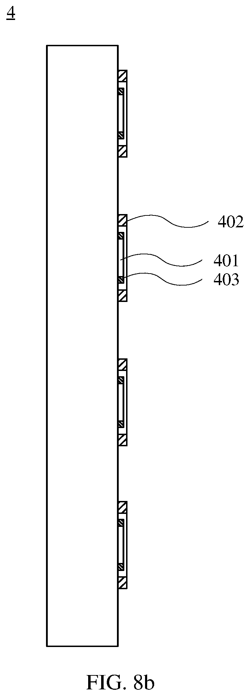

It may be understood that, in a possible embodiment of this application, the sealing element 402 may alternatively be fastened to the smoke exhaust pipe 4 in a manner such as bonding, to improve reliability of a connection between the sealing element 402 and the smoke exhaust pipe 4. In addition, to avoid direct contact between high-temperature smoke and the sealing element 402, a limiting frame 403 may be further disposed for the sealing element 402. During specific implementation, refer to FIG. 8b. FIG. 8b is a left view of the smoke exhaust pipe 4 shown in FIG. 8a. The limiting frame 403 may be fastened to the smoke exhaust pipe 4 in a manner not limited to bonding, riveting, or screwing, the limiting frame 403 is disposed around the second mounting hole 401, and the sealing element 402 may be sheathed on an outer circumferential side of the limiting frame 403. In this way, direct contact between high-temperature smoke exported from the air conduit 206 and the sealing element 402 can be effectively avoided, thereby effectively improving reliability of the sealing element 402.

In this application, a specific material of the limiting frame 403 is not limited. For example, the limiting frame 403 may be a non-metal heat insulation plate such as a mica plate or an epoxy plate. In this way, the air conduit 206 may abut against the limiting frame 403, so that the limiting frame 403 not only can perform a heat insulation function on the sealing element 402, but also can limit a compression rate of the sealing element 402, thereby avoiding damage to the sealing element 402 caused by overcompression, and improving sealing reliability of the sealing element 402.

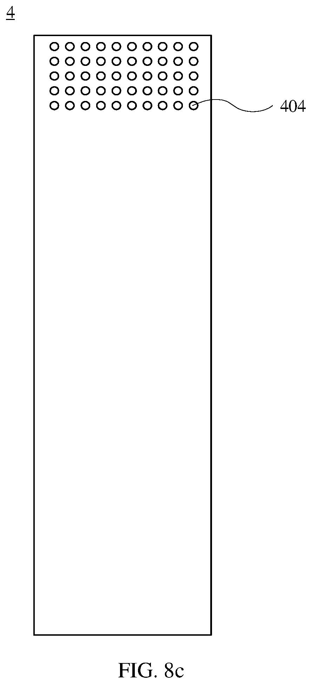

In addition, refer to FIG. 8c. FIG. 8c is a left view of the smoke exhaust pipe 4 shown in FIG. 8b. In this application, an exhaust hole 404 may be further disposed on the smoke exhaust pipe 4, and the exhaust hole 404 may communicate with the exhaust vent 101 of the box 1 shown in FIG. 4. In addition, in the vertical direction, the exhaust hole 404 may be disposed above the smoke exhaust pipe 4, to form a chimney effect, thereby facilitating smoke discharging. In addition, in consideration of a rainproof design of the smoke exhaust pipe 4, in this application, the exhaust hole 404 may be disposed as a shutter hole, or a ventilation shutter may be mounted outside the exhaust hole 404.

In this application, a quantity of exhaust holes 404 disposed on the smoke exhaust pipe 4 is not limited. For example, two or more exhaust holes 404 may be disposed. The exhaust hole 404 may be disposed based on a specific application scenario. In addition, a shape of the exhaust hole 404 is not limited in this application. For example, the exhaust hole 404 may be in a regular shape not limited to a circle or a square, or may be in some possible irregular shapes.

It may be understood that FIG. 8a and FIG. 8c respectively show two surfaces that are of the smoke exhaust pipe 4 and that are disposed opposite to each other. That is, in this embodiment, a surface that is of the smoke exhaust pipe 4 and that is used for the air conduit 206 is disposed opposite to a surface that is of the smoke exhaust pipe 4 and that is configured to dispose the exhaust hole 404. In this way, after entering the smoke exhaust pipe 4 through the air conduit 206, smoke in the battery module 2 may pass through the exhaust hole 404 and then be discharged to the outside of the box 1 through the exhaust vent 101.

In this application, the surface that is of the smoke exhaust pipe 4 and that is used for the air conduit 206 and the surface that is of the smoke exhaust pipe 4 and that is configured to dispose the exhaust hole 404 may alternatively be disposed in another possible manner, in addition to being disposed opposite to each other. For example, the two surfaces may be disposed adjacently, and in this case, the surface that is configured to dispose the exhaust hole 404 may be used as a top surface of the smoke exhaust pipe 4.

It may be understood that, in the energy storage cabinet provided in this application, a quantity of smoke exhaust pipes 4 is not limited. For example, in the energy storage cabinets shown in FIG. 2 to FIG. 4, only one smoke exhaust pipe 4 is disposed, and the module housings 201 of the battery modules 2 in the energy storage cabinet communicate with the same smoke exhaust pipe 4 by using respective air conduits 206, so that the structure of the energy storage cabinet is relatively simple. In some possible embodiments of this application, a plurality of smoke exhaust pipes 4 may alternatively be disposed in each energy storage cabinet. In this way, each smoke exhaust pipe 4 may communicate with a module housing 201 of at least one battery module 2, and this may be designed based on a specific arrangement manner of the battery modules 2 in the energy storage cabinet.

In the foregoing embodiments, the smoke exhaust pipe 4 and the cooling system 3 may be located on two wall surfaces that are of the box 1 and that are disposed opposite to each other. For ease of description, a wall surface that is of the box 1 and that is configured to dispose the cooling system 3 may be referred to as a first wall surface, and a wall surface for disposing the smoke exhaust pipe 4 is referred to as a second wall surface. In this case, the first wall surface and the second wall surface are disposed opposite to each other.

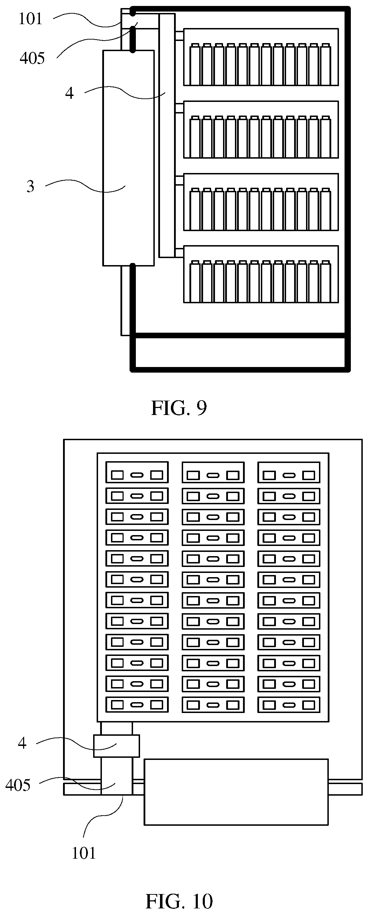

Refer to FIG. 9. FIG. 9 is a diagram of a structure of an energy storage cabinet according to another possible embodiment of this application. In this embodiment, the exhaust vent 101 of the box 1 is also disposed on the first wall surface. In this case, the smoke exhaust pipe 4 may be disposed between the first wall surface and the air conduit 206.

In addition, refer to FIG. 10. FIG. 10 is a top view of the energy storage cabinet shown in FIG. 9. To facilitate communication between the smoke exhaust pipe 4 and the exhaust vent 101, the smoke exhaust pipe 4 may have a connection part 405, so that the communication between the smoke exhaust pipe 4 and the exhaust vent 101 may be implemented through communication between the connection part 405 and the exhaust vent 101. In this embodiment, another structure of the smoke exhaust pipe 4, a connection manner between the smoke exhaust pipe 4 and the air conduit 206 may be disposed with reference to the foregoing embodiment, and details are not described herein.

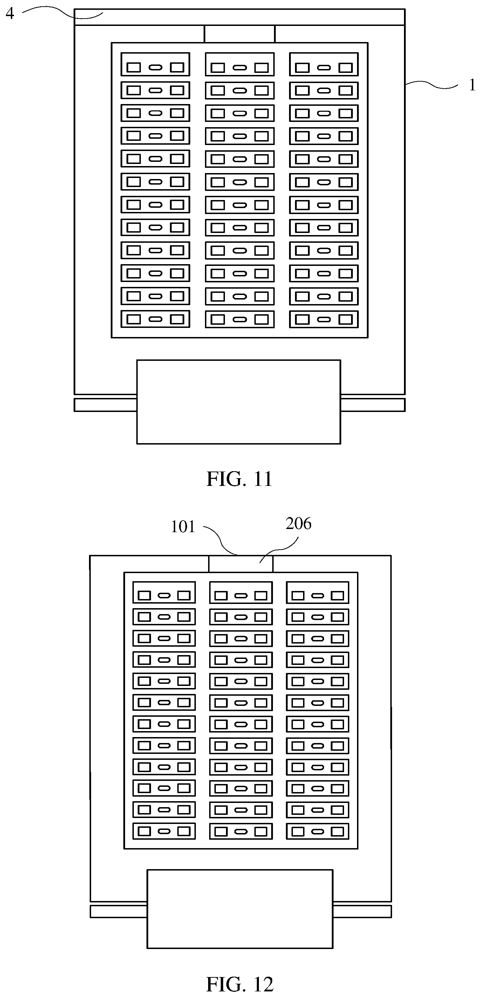

In this application, in some other possible embodiments of this application, refer to FIG. 11. In addition to the independent structure of the smoke exhaust pipe 4 shown in the foregoing embodiment, the smoke exhaust pipe 4 may alternatively form an integrated structure with the box 1, so that the structure of the energy storage cabinet may be effectively simplified.

It may be understood that, when the smoke exhaust pipe 4 and the box 1 are an integrated structure, the exhaust hole of the smoke exhaust pipe 4 may be used as the exhaust vent of the box 1. In other words, this solution can avoid a communication operation between the exhaust hole and the exhaust vent, effectively simplify an assembly process of the energy storage cabinet, and reduce a risk of smoke overflowing into the box 1.

In some other possible embodiments of this application, to simplify the structure of the energy storage cabinet, the smoke exhaust pipe 4 may alternatively not be disposed in the energy storage cabinet. During specific implementation, refer to FIG. 12. FIG. 12 is a diagram of a structure of an energy storage cabinet according to another possible embodiment of this application. In this embodiment, the air conduit 206 may directly communicate with the exhaust vent 101 of the box 1, so that smoke may be directly released to the outside of the box 1 through the exhaust vent 101 after passing through the air conduit 206.

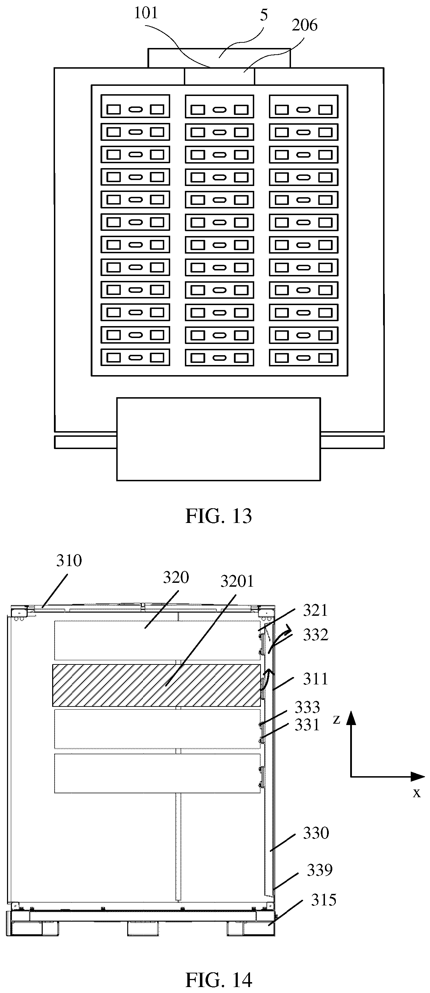

In addition, to reduce entry of dust, liquid, or the like into the box 1, a protective cover 5 may be further disposed on the energy storage cabinet. During specific implementation, refer to FIG. 13. FIG. 13 is a diagram of a structure of an energy storage cabinet according to another embodiment of this application. In this embodiment, the protective cover 5 is disposed on an outer side of the box 1, and the protective cover 5 is buckled onto the exhaust vent 101.

It may be understood that, to enable the smoke to be discharged to the outside of the box 1, an exhaust hole (not shown in FIG. 13) may be further disposed on the protective cover 5. The exhaust hole may be disposed as a shutter hole, or a ventilation shutter may be mounted outside the exhaust hole. In addition, in this embodiment, a shape of the exhaust hole is not specifically limited. The exhaust hole may be in a regular shape not limited to a circle or a square, or may be in some possible irregular shapes.

According to the energy storage cabinet provided in this application, high-temperature smoke generated by the electrochemical cell 202 due to thermal runaway may be discharged into the module housing 201, so that oxygen in the module housing 201 is discharged, an oxygen concentration in the module housing 201 is lower than an ultimate oxygen concentration of flammable gas, and a non-fire atmosphere is formed in the module housing 201. In addition, when the smoke is discharged from the module housing 201 to the smoke exhaust pipe 4, a chimney effect may be formed, so that the smoke can be discharged. In addition, because there is no ignition source in the smoke exhaust pipe 4, a risk of ignition and explosion in the smoke exhaust pipe 4 is reduced. Therefore, according to the energy storage cabinet provided in this application, a risk of ignition and explosion may be reduced in three layers of structures that are the electrochemical cell 202, the battery module 2, and the entire system, an explosion proof design cost and a maintenance cost of the energy storage cabinet are reduced, and response timeliness, reliability, and effectiveness of the explosion proof design are improved.

To resolve a thermal runaway problem of an energy storage cabinet, this application provides an energy storage cabinet 300. For a structure of the energy storage cabinet 300, refer to FIG. 14. FIG. 14 is a sectional view of the energy storage cabinet 300 in a side view direction. The energy storage cabinet 300 includes a box 310 and a plurality of stacked battery packs 320. The plurality of battery packs 320 are arranged along a height direction of the energy storage cabinet (a z direction in FIG. 14 is the height direction of the energy storage cabinet, and an x direction is a width direction of the energy storage cabinet). In other words, the plurality of battery packs 320 are stacked along the z direction, to meet a requirement of the energy storage cabinet in a large-capacity application scenario. The box 310 accommodates the plurality of battery packs 320. A plurality of battery supports may be disposed inside the box 310. The plurality of battery supports are spaced apart along the z direction. The battery supports extend along the x direction. Each battery pack 320 may be placed on a corresponding support and fastened to the support, so that the battery pack 320 is fastened inside the box 310. In this way, the battery packs 320 inside the box 310 do not easily shake during carrying or transportation of the energy storage cabinet 300, thereby ensuring reliability of the energy storage cabinet 300.

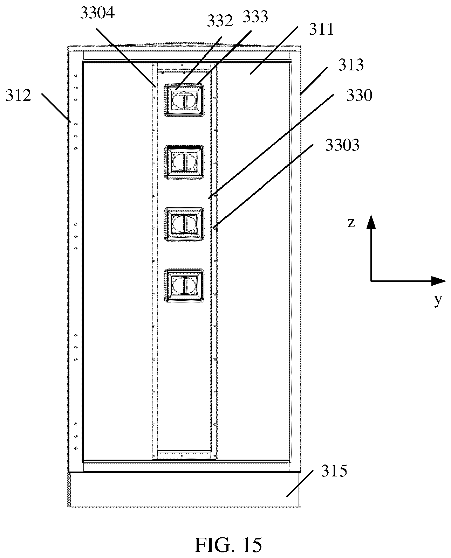

Continue to refer to FIG. 14 and a front sectional view of the energy storage cabinet 300 shown in FIG. 15 (a y direction in the figure is a length direction of the energy storage cabinet). The box 310 includes a cabinet wall, and the box 310 may include three cabinet walls and a box door. A cabinet wall disposed opposite to and parallel to the box door (not shown in the figure) is a rear wall 311, and the remaining two cabinet walls may be respectively a left wall 312 and a right wall 313. In this application, a smoke exhaust pipe 330 is disposed on the rear wall 311, that is, the smoke exhaust pipe 330 is located between the rear wall 311 and the plurality of battery packs 320. The smoke exhaust pipe 330 extends along the z direction, and a plurality of smoke intake vents 331, a smoke exhaust vent 332, and an air vent 339 are disposed on the smoke exhaust pipe 330. The plurality of smoke intake vents 331 are spaced apart along the z direction and one-to-one correspond to the battery packs 320. The plurality of smoke intake vents 331 and the smoke exhaust vent 332 communicate with the smoke exhaust pipe 330. The smoke exhaust vent 332 and the air vent 339 communicate with an external environment of the energy storage cabinet 300. A position of the smoke exhaust vent 332 on the smoke exhaust pipe 330 is higher than a position of the air vent 339.

A pressure relief valve is disposed on an outer wall 321 of the battery pack 320, and a sealing element 333 is disposed between the pressure relief valve and the smoke intake vent. The sealing element 333 includes two ends that are disposed parallel to each other along the x direction. An opening at one end of the sealing element 333 covers an outer circumference of the pressure relief valve, an opening at the other end of the sealing element 333 covers an outer circumference of a smoke intake vent 331 corresponding to the pressure relief valve, and a sealing structure is formed between the battery pack 320 and the corresponding smoke intake vent 331. The sealing element 333, a first side wall 334, and the outer wall 321 of the battery pack 320 form sealed space through enclosure, and the pressure relief valve on the outer wall 321 of the battery pack 320 is located in the sealed space. When the battery pack 320 is mounted inside the energy storage container from the box door, the battery pack 320 is generally pushed into the energy storage container along the x direction in FIG. 14 by using a tool. The sealing element 333 presses the first side wall 334 along the x direction under pressure of the battery pack 320, and a joint between the battery pack 320 and the smoke exhaust pipe 330 is sealed by compressing the sealing element 333, to prevent smoke from overflowing into the box 310 to cause thermal runaway to spread to another battery pack 320. For example, the sealing element 333 is a sealing rubber strip. When the battery pack 320 presses the first side wall 334, a compression ratio of the sealing rubber strip may be 1/3 to 1/2, to implement sealing between the smoke exhaust pipe 330 and the battery pack 320. The sealing element 333 may alternatively be sealing glue.

After the pressure relief valve of the battery pack 320 is opened, the battery pack 320 communicates with the smoke exhaust pipe 330 by using the pressure relief valve and the smoke intake vent 331 corresponding to the battery pack 320. In other words, communication between the battery pack 320 and the smoke exhaust pipe 330 are controlled by controlling opening or closing of the pressure relief valve. When thermal runaway occurs on the battery pack 3201, the pressure relief valve of the battery pack 3201 is opened, and high-temperature gas released by the battery pack 3201 is released to the smoke exhaust pipe 330 through an opening of the pressure relief valve of the battery pack 3201 and the smoke intake vent 331, and then is discharged to an external environment through the smoke exhaust vent 332 of the smoke exhaust pipe 330. For a flow direction of the gas, refer to an arrow direction in FIG. 14. In addition, when thermal runaway occurs on the battery pack 3201, a large amount of electrolyte is further generated. After the electrolyte is released to the smoke exhaust pipe 330 through the opening of the pressure relief valve and the smoke intake vent 331, the electrolyte falls down along a direction opposite to the z direction under an action of gravity. The air vent 339 is disposed below the smoke exhaust vent 332, so that the high-temperature gas released by the battery pack 3201 may be released to the external environment through the smoke exhaust vent 332 in an upper part of the smoke exhaust pipe 330 under a chimney effect, and the electrolyte released by the battery pack 3201 is released to the external environment through the air vent 339 in a lower part of the smoke exhaust pipe 330. In addition, because the air vent 339 is disposed, balance between internal and external atmospheric pressure of the smoke exhaust pipe 330 may be maintained. This avoids a sharp decrease in the internal atmospheric pressure of the smoke exhaust pipe 330 caused by discharging of the high-temperature gas generated by the battery pack 320 into the smoke exhaust pipe 330, and avoids deformation of the smoke exhaust pipe 330. **In** addition, the high-temperature gas generated by the battery pack 320 can be quickly discharged to the external environment, thereby reducing a risk of ignition and explosion of the battery pack 320. In addition, because the battery packs 320 are disposed in one-to-one correspondence with the smoke intake vents 331, high-temperature gas generated by a battery pack 320 due to thermal runaway can enter a corresponding smoke intake vent 331 in a directional manner, so that the high-temperature gas released by the battery pack 320 can be prevented from spreading inside a battery compartment, thereby preventing thermal runaway from spreading to another battery pack 320 to cause thermal runaway of the entire energy storage cabinet 300. The directional smoke exhaust pipe 330 is disposed in the energy storage cabinet, so that high-temperature smoke does not accumulate inside the energy storage cabinet 300 to cause explosion of the battery box, and does not spread from the energy storage cabinet 300 to the inside of the battery pack 320 to cause a secondary hazard, thereby improving safety performance of the energy storage cabinet 300.

The energy storage cabinet further includes a base 315. The base 315 serves as a foundation support for the energy storage cabinet 300, and can improve mechanical structure stability of the energy storage cabinet 300. In addition, direct contact between a bottom surface of the energy storage cabinet and a ground can be avoided, thereby preventing the energy storage cabinet from being damped.

It should be noted that a shape of the smoke exhaust pipe 330 is not limited, and the smoke exhaust pipe 330 may be of a cylindrical tubular structure, or may be of a square tubular structure.

It should be noted that shapes and quantities of the smoke exhaust vent 332 and the smoke intake vent 331 are not limited either. For example, the smoke exhaust vent 332 and the smoke intake vent 331 may be in any shape. For example, the smoke exhaust vent 332 and the smoke intake vent 331 may be in a regular shape not limited to a circle or a square, or may be in some possible irregular shapes. There may be one or more smoke exhaust vents 332. The smoke intake vent 331 may also include a plurality of smoke intake holes.

To ensure a smoke exhaust effect, a sum of an area of the smoke exhaust vent 332 and an area of the smoke intake vent 331 should be greater than an area in which gas can flow after the pressure relief valve of the battery pack 320 is opened, to prevent high-temperature smoke and flammable gas from accumulating inside the battery pack 320 or the smoke exhaust pipe 330 to cause explosion.

A type of the pressure relief valve on the battery pack 320 is not specifically limited in this embodiment of this application. For example, as a pressure relief element, the pressure relief valve may be a metallic or plastic pressure relief sheet with a nick, and when specific pressure is reached, the pressure relief sheet breaks to relieve the pressure. The pressure relief valve may alternatively be a waterproof and breathable pressure relief valve, and a waterproof and breathable film is disposed in the pressure relief valve. When the battery pack 320 is in a normal working state, gas exchange is performed between gas inside the battery pack 320 and the outside by using the pressure relief valve, to maintain balance of atmospheric pressure inside the battery pack 320. The waterproof and breathable film can prevent dust and a water droplet from entering the battery pack 320. When thermal runaway occurs inside the battery pack 320 and causes atmospheric pressure inside the battery pack 320 to be excessively high, the pressure relief valve is in an opened state and quickly discharges gas inside the battery pack 320, to relieve pressure. The pressure relief valve may alternatively be a spring-type pressure relief valve, and includes a valve body, an elastic component, and a protection cover. When atmospheric pressure inside the battery pack 320 sharply rises, the elastic component pushes the protection cover open, and the pressure relief valve is opened to quickly relieve pressure. In addition, the pressure relief valve has a positive pressure oxygen blocking function. On the one hand, the pressure relief valve can prevent external oxygen from entering the battery pack 320, and on the other hand, gas exchange may be performed between gas inside the battery pack 320 and the outside by using the pressure relief valve.

It should be noted that the pressure relief valve may actively open. For example, if atmospheric pressure inside the battery pack 320 is excessively high, the pressure relief valve automatically opens to relieve the pressure. The pressure relief valve may alternatively be passively opened by connecting to a control module (for example, a BMS, Battery Management System, configured to perform intelligent management and maintenance on a battery). For example, a smoke sensor, a flammable gas sensor, or a temperature sensor may be disposed inside the battery pack 320. When the sensor detects that atmospheric pressure, gas, or a temperature inside the battery pack 320 is abnormal, the BMS controls a pressure relief valve corresponding to the battery pack 320 to open, so that the battery pack 320 communicates with the smoke exhaust pipe 330, to implement directional discharging of smoke released by the battery pack 320 during thermal runaway.

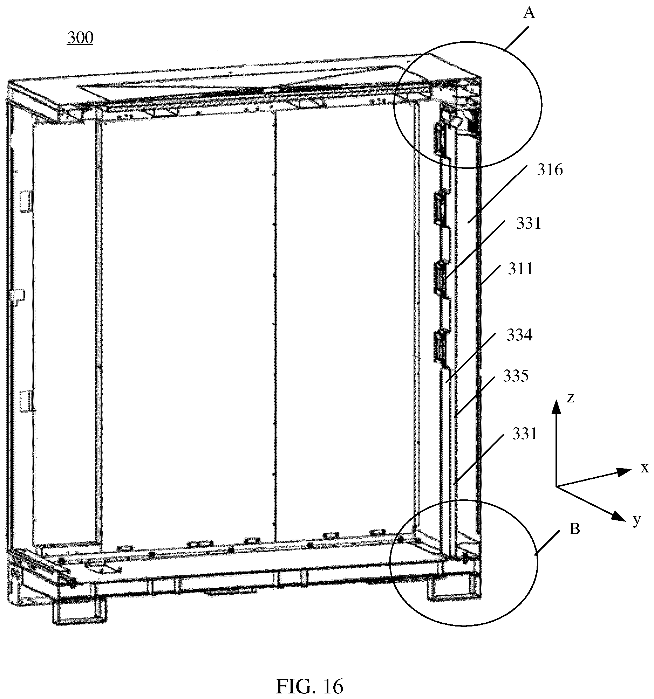

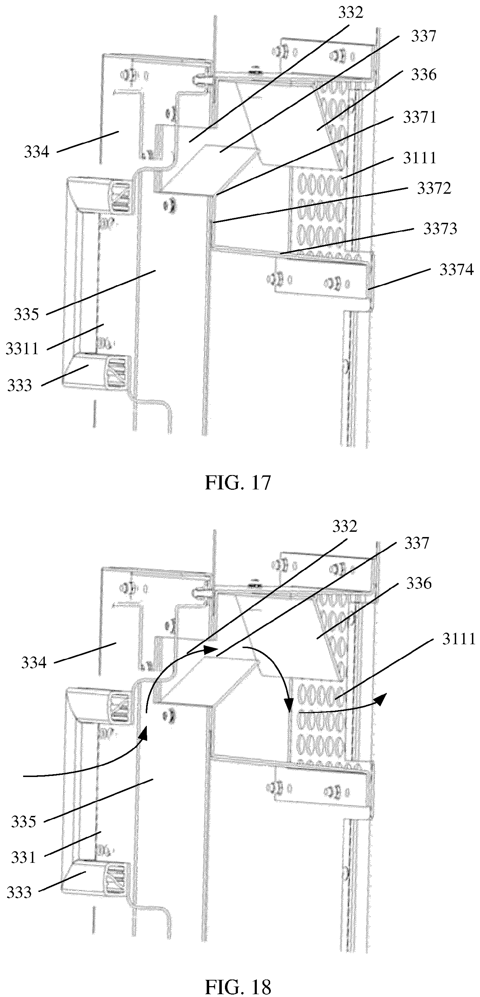

In an example, the smoke exhaust pipe 330 and the box 310 may alternatively be components independent of each other. For structures of the smoke exhaust pipe 330 and the box 310, refer to a diagram of a structure of an energy storage cabinet shown in FIG. 16. When a cross section of the smoke exhaust pipe 330 is a square, the smoke exhaust pipe 330 may include four side walls that are sequentially connected, a first side wall 334 and a second side wall 335 are disposed parallel to each other, and the second side wall 335 is located between the first side wall 334 and the rear wall 311. The first side wall 334 is disposed parallel to a plurality of battery packs 320 (not shown in FIG. 16), a plurality of smoke intake vents 331 are disposed on the first side wall 334, the plurality of smoke intake vents 331 one-to-one correspond to the plurality of battery packs 320, and each smoke intake vent 331 is disposed opposite to a pressure relief valve of each battery pack 320. Continue to refer to an enlarged diagram that is of a structure in a region A in FIG. 16 and that is shown in FIG. 17, a smoke exhaust vent 332 is disposed on the second side wall 335, and a lower edge of the smoke exhaust vent 332 is higher than an upper edge of a top smoke intake vent 3311 located on the first side wall 334. A plurality of exhaust holes 3111 are disposed in an upper region on the rear wall 311, and a projection of the upper region in the x direction is greater than an orthographic projection of the smoke exhaust vent 332 in the x direction. When thermal runaway occurs on the battery pack 320, high-temperature gas released by the battery pack 320 is released to the smoke exhaust pipe 330 through the smoke intake vent 331, then released to a gap between the rear wall 311 and the second side wall 335 through the smoke exhaust vent 332 in an upper part of the second side wall 335, and then released to an external environment through the plurality of exhaust holes 3111 disposed on the rear wall 311, to implement directional smoke discharging of the energy storage cabinet 300.

Still refer to FIG. 16. There is a gap 316 between the second side wall 335 and the rear wall 311, and the gap 316 is filled with a flame retardant material. When thermal runaway occurs on the battery pack 320, the flame retardant material may isolate the rear wall 311 from the smoke exhaust pipe 330 filled with high-temperature gas, to prevent the entire energy storage cabinet 300 from catching fire. The flame retardant material may be rock wool, a calcium carbonate plate, silicon dioxide, or the like; or may be some flame retardants represented by bromide, nitrogen, red phosphorus, and a compound; or may be a flame retardant material such as antimony trioxide, magnesium hydroxide, aluminum hydroxide, or silicon.

In another example, to better use the chimney effect during gas discharging, the lower edge of the smoke exhaust vent 332 is designed to be higher than the upper edge of the top smoke intake vent 331 in the plurality of smoke intake vents 331.

Because the plurality of exhaust holes 3111 and the smoke exhaust vent 332 implement communication between the external environment and the smoke exhaust pipe 311, when the external environment is rainy weather, rainwater and dust may enter the smoke exhaust pipe 311 through the plurality of exhaust holes 3111 and the smoke exhaust vent 332, and water may accumulate at the sealing element 333, causing damage to the sealing structure, and causing a gap between the battery pack 320 and the first side wall 334. When thermal runaway occurs on one of the battery packs 320, smoke released by the battery pack 320 may be released to the energy storage cabinet 300 through a gap, so that thermal runaway spreads to another battery pack 320, thereby causing thermal runaway of the entire energy storage cabinet 300. Therefore, to prevent rainwater from entering the smoke exhaust pipe 330, a maze baffle structure may be disposed between the rear wall 311 and the second side wall 334. Still refer to FIG. 17. A first baffle plate 336 is fastened to a top wall of the box 310, and is disposed at the plurality of smoke exhaust holes 3111. An orthographic projection of the first baffle plate 336 in the x direction at least covers orthographic projections of the plurality of exhaust holes 3111 in the x direction, to ensure an effect of blocking the smoke exhaust holes 3111.

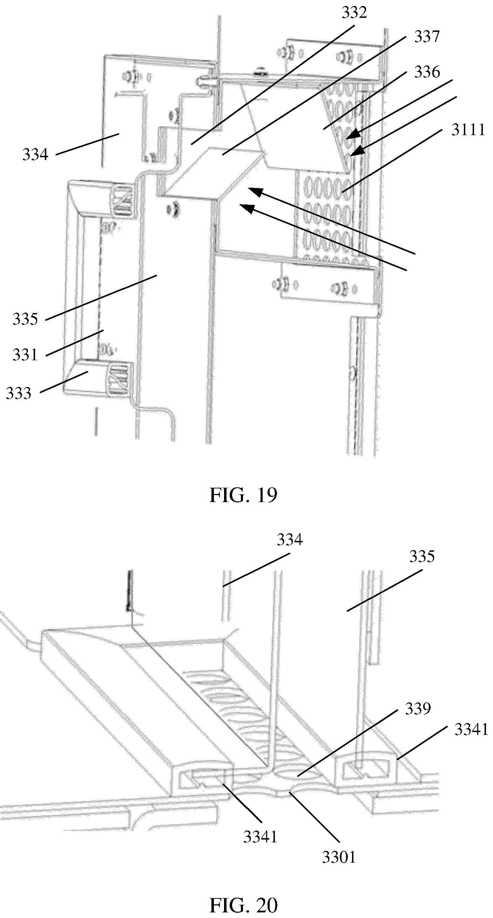

In addition, a second baffle plate 337 is disposed at the smoke exhaust vent 332, and the second baffle plate 337 is fastened to the lower edge of the smoke exhaust vent 332. There is a gap between the first baffle plate 336 and the second baffle plate 337, and there is a partially overlapping region between orthographic projections of the first baffle plate and the second baffle plate in the x direction. To reduce resistance of the first baffle plate 336 and the second baffle plate 337 to smoke when the energy storage cabinet 300 performs directional smoke discharging, both the first baffle plate 336 and the second baffle plate 337 are inclined towards the rear wall. FIG. 18 is a diagram of a flow direction of internal gas when thermal runaway occurs on a battery pack. For a flow direction of high-temperature smoke released when thermal runaway occurs on the battery pack 320, refer to an arrow direction in FIG. 18. FIG. 19 is a diagram of a flow direction of external rainwater. When the external environment is rainy weather, when external rainwater enters the gap between the rear wall 3111 and the second side wall 335 through an upper half of the exhaust holes 3111, the external rainwater is blocked by the first baffle plate 336; and when external rainwater enters the gap between the rear wall 3111 and the second side wall 335 through a lower half of the exhaust holes 3111, the external rainwater is blocked by the second baffle plate 337, thereby implementing all-round rainwater-proof protection for the smoke exhaust pipe. This improves reliability and safety of the energy storage cabinet 300.

Still refer to FIG. 17. There are a plurality of connection manners between the second baffle plate 337 and the rear wall 311. For example, the second baffle plate 337 includes a first bent part 3371, a second bent part 3372, a third bent part 3373, and a fourth bent part 3374. The first bent part 3371 is inclined towards the rear wall 311, an included angle between the first bent part 3371 and the second bent part 3372 is an obtuse angle, the second bent part 3372 is parallel to and connected to the second side wall 335, the third bent part 3373 is connected between the second bent part 3372 and the fourth bent part 3374, and the fourth bent part 3374 is parallel to and connected to the rear wall 311. The third bent part 3373 is located below the plurality of exhaust holes 3111, the third bent part 3373 divides space between the rear wall 311 and the second side wall 335 into upper space and lower space, and the lower space is filled with a flame retardant material.

It should be understood that designs of the first baffle plate 336 and the second baffle plate 337 may further prevent entry of external foreign matter. For example, in sandy weather, external foreign matter may enter the smoke exhaust pipe 330 through the exhaust holes 3111 and the smoke exhaust vent 332 under an effect of natural wind, and then attach to a surface of the pressure relief valve through the smoke intake vent 331, thereby causing the pressure relief valve to be blocked. Once thermal runaway occurs on the battery pack 320, the pressure relief valve cannot be opened in a timely manner due to blockage, and high-temperature smoke generated by the battery pack 320 gathers inside the battery pack 320, thereby causing explosion. The maze baffle structure is disposed at the smoke exhaust hole, so that entry of external foreign matter may be blocked to some extent, thereby improving reliability and safety of the energy storage cabinet 300.

In another example, the first baffle plate 336 is disposed parallel to the rear wall 311, a plurality of through holes may be disposed on the first baffle plate 336, and the plurality of through holes do not overlap the plurality of exhaust holes 3111. In other words, the plurality of through holes and the plurality of exhaust holes 3111 are disposed in a staggered manner. When external rainwater enters, the first baffle plate 336 can block the rainwater to some extent. In addition, when thermal runaway occurs on the battery pack 320, smoke can be discharged through the through holes in a timely manner.

It should be understood that, to ensure balance of atmospheric pressure inside the smoke exhaust pipe 330 during smoke discharging, an air vent 339 is further disposed on the smoke exhaust pipe 330, and a position of the smoke exhaust vent 332 on the smoke exhaust pipe 330 is higher than a position of the air vent 339. For example, the air vent 339 may be disposed on a bottom wall 3301 of the smoke exhaust pipe 330, and the bottom wall 330 is perpendicular to both the first side wall 334 and the second side wall 335. For a structure of the air vent 339, refer to FIG. 20. FIG. 20 is an enlarged diagram of a position B in FIG. 16. The air vent 339 is disposed on the bottom wall 3301 of the smoke exhaust pipe 330. When thermal runaway occurs on the battery pack 320, the pressure relief valve of the battery pack 320 is opened, and high-temperature gas released by the battery pack 320 is released to the smoke exhaust pipe 330 through the smoke intake vent 331, and then is discharged to an external environment through the smoke exhaust vent 332 of the smoke exhaust pipe 330. When thermal runaway occurs on the battery pack 320, a large amount of electrolyte is released. After the electrolyte is released to the smoke exhaust pipe 330 through the opening of the pressure relief valve and the smoke intake vent 331, the electrolyte falls down under an action of gravity, and then is released to the external environment through the air vent 339 on the top wall 3301 of the smoke exhaust pipe 330.

The smoke exhaust pipe 330 is an independent component relative to the energy storage cabinet 300, and the first side wall 334 and the second side wall 335 may be fastened inside the box 310 through welding or in another connection manner. To further simplify a structural design of the smoke exhaust pipe 330 inside the box 310, the smoke exhaust pipe 330 may reuse a bottom wall of the energy storage cabinet 300. To ensure sealing between the smoke exhaust pipe 330 and the box 310, sealing components 3341 may be disposed between the bottom wall and bottom surfaces that are of the first side wall 334 and the second side wall 335 and that face the bottom wall 3301. For a structural position relationship of the sealing components 3341, refer to FIG. 20. The air vent 339 is located on the bottom wall between the two sealing components 3341, and can discharge accumulated water and electrolyte inside the smoke exhaust pipe 330 to the external environment in a timely manner. In addition, the smoke exhaust pipe 330 reuses the bottom wall of the energy storage cabinet 300, so that a manufacturing step of drilling a hole again is omitted, and production efficiency is improved.

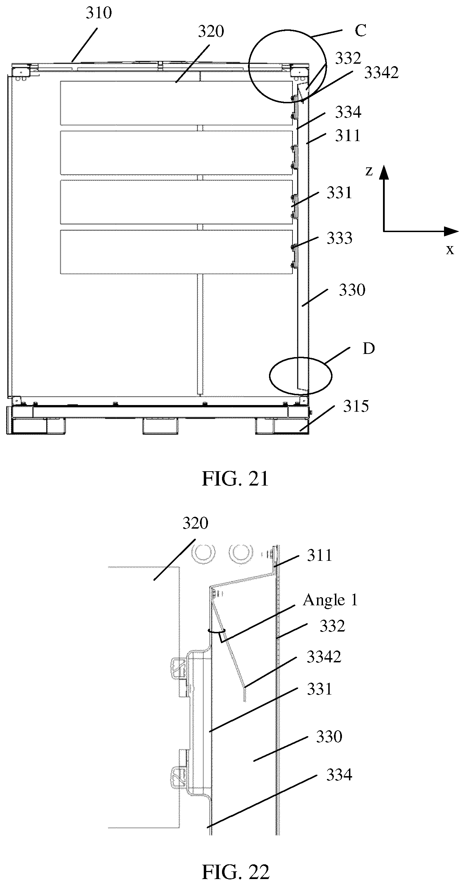

In another example, the smoke exhaust pipe 330 may form an integrated structure with the box 310, so that the structure of the energy storage cabinet 300 may be effectively simplified. In this case, the rear wall 311 of the box 310 may serve as a side wall of the smoke exhaust pipe 330, and the smoke exhaust vent 332 of the smoke exhaust pipe 330 is directly disposed on the rear wall 311 of the box 310. This solution can avoid a communication operation between the smoke exhaust vent 332 and the exhaust hole of the box 310, effectively simplify an assembly process of the energy storage cabinet 300, and reduce a risk of smoke overflowing into the box 310. For structures of the smoke exhaust pipe 330 and the box, refer to a diagram of a structure of an energy storage cabinet 300 shown in FIG. 21. The smoke exhaust pipe 330 includes a first side wall 334, the first side wall 334 is located between the rear wall 311 and the outer wall 321 of the battery pack 320, a plurality of smoke intake vents 331 are disposed on the first side wall 334, a smoke exhaust vent 332 is disposed on the rear wall 311, and the smoke exhaust vent 332 may be a plurality of smoke exhaust holes 3111.

Still refer to FIG. 21. To prevent external rainwater from entering the smoke exhaust pipe 330, a baffle plate 3342 is disposed between the smoke exhaust vent 332 and the first side wall 334, and an included angle between the baffle plate 3342 and the first side wall 334 is an acute angle. For a structural position of the baffle plate 3342, refer to FIG. 22. FIG. 22 is an enlarged diagram of a region C in FIG. 21. The baffle plate 3342 is located between the smoke exhaust vent 332 and the first side wall 334, the baffle plate 3342 is fastened to the first side wall 334, and an included angle, that is, an angle 1, between the baffle plate 3342 and the first side wall 334 is an acute angle. That is, the baffle plate 3342 is inclined towards the smoke exhaust vent 332. The pressure relief valve of the battery pack 320 located near the smoke exhaust vent 332 is disposed towards the smoke intake vent 331 on the first side wall 334. When the external environment is relatively poor, for example, in sandy weather, external foreign matter may enter the smoke exhaust pipe 330 through the smoke exhaust vent 332 under an effect of natural wind, and then attach to a surface of the pressure relief valve through the smoke intake vent 331, thereby causing the pressure relief valve to be blocked. Once thermal runaway occurs on the battery pack 320, the pressure relief valve cannot be opened in a timely manner due to blockage, and high-temperature smoke generated by the battery pack 320 gathers inside the battery pack 320, thereby causing explosion. The baffle plate 3342 that is inclined towards the smoke exhaust vent 332 is disposed at the smoke exhaust vent 332, so that entry of external foreign matter or rainwater may be blocked to some extent. After rainwater or foreign matter enters the smoke exhaust pipe 330, the rainwater or the foreign matter falls vertically along the baffle plate 3342 and the smoke exhaust pipe 330.

It should be understood that the smoke exhaust pipe 330 may further reuse a bottom wall of the box 310, and the first side wall 334 and the rear wall 311 are perpendicular to the bottom wall 3301 of the smoke exhaust pipe 330. To improve sealing between the first side wall 334 and the box 310, a sealing component is disposed between the bottom wall and a bottom surface that is of the first side wall 334 and that faces the bottom wall 3301, the air vent 339 is disposed on the bottom wall, and the air vent 339 is located between the rear wall and the sealing component.

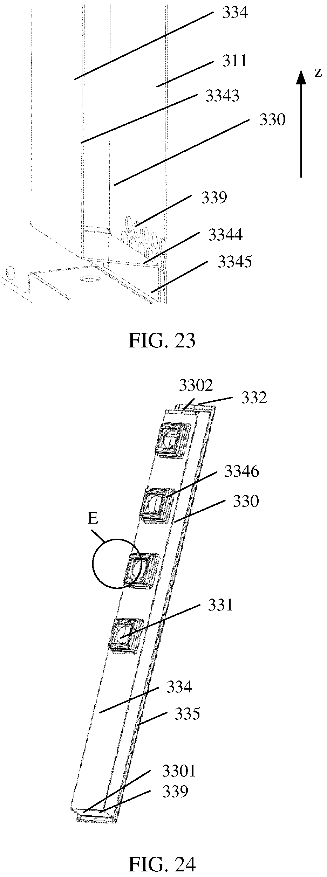

In another example, the smoke exhaust pipe 330 may not reuse the bottom wall of the box. For example, the first side wall 334 is a sheet metal part, the first side wall includes three parts, and the three parts are bent in a "Z" shape. A first part 3342 is disposed parallel to the rear wall 311, a plurality of smoke intake vents 331 are disposed on the first part 3342, a second part 3344 serves as a bottom wall of the smoke exhaust pipe 330, and a third part 3345 is fastened to the rear wall 311. The air vent 339 may be disposed on the rear wall 311. For example, the air vent 339 is disposed in a region above a junction between the rear wall 311 and the bottom wall 3344 of the smoke exhaust pipe. For a structure of the air vent 339, refer to FIG. 23. FIG. 23 is an enlarged diagram of a region D in FIG. 21. The second part 3344 may be designed to be inclined downward, that is, an included angle between the second part 3344 and the first part 3343 is an obtuse angle, and an included angle between the second part 3344 and the rear wall 311 is an acute angle. When rainwater seeps into the smoke exhaust pipe 330, the rainwater may slide out through the air vent 339 along a slope of the second part 3344, and be discharged to the external environment.

In another example, the smoke exhaust vent 332 may alternatively be disposed on a top wall of the smoke exhaust pipe 330. For a diagram of a structure of the smoke exhaust pipe 330, refer to FIG. 24. The smoke exhaust pipe 330 includes a top wall 3302, a bottom wall 3301, a first side wall 334, and a second side wall 335. The bottom wall 3301 and the top wall 3302 are disposed parallel to each other. The bottom wall 3301 and the top wall 3302 intersect with the first side wall 334 and the second side wall 335. The first side wall 334 is disposed parallel to the outer wall of the battery pack 320. A plurality of smoke intake vents 331 are disposed on the first side wall 334, a smoke exhaust vent 332 is disposed on the top wall 3302, and an air vent 339 is disposed on the bottom wall 3301. High-temperature smoke released when thermal runaway occurs on the battery pack 320 is discharged to the external environment through the smoke exhaust vent 332 on the top wall 3302, and released electrolyte or accumulated water in the smoke exhaust pipe 330 may be discharged to the external environment through the air vent 339 on the bottom wall 3301.

It should be understood that the second side wall 335 may reuse the rear wall 311 of the energy storage cabinet 300, thereby simplifying a structural design of the energy storage cabinet 300.

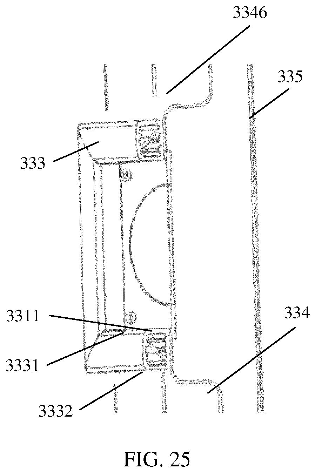

FIG. 25 is a sectional view of a region E in FIG. 24, and is a structure of the sealing element 333. The other end of the sealing element 333 includes an inner wall 3331 and an outer wall 3332 that are disposed opposite to each other. The inner wall 3331 is disposed to face the smoke intake vent 331. A lower edge of the inner wall 3331 of the sealing element and a lower edge 3311 of the smoke intake vent 331 are on a same horizontal plane, or a lower edge of the inner wall 3331 of the sealing element 333 is higher than a lower edge of the smoke intake vent 331. If external rainwater enters the smoke exhaust pipe 333, the external rainwater may attach to the inner wall 3331 of the sealing element 3311 through the smoke intake vent 331. If the lower edge of the inner wall 3331 of the sealing element 333 is lower than the lower edge of the smoke intake vent 331, the rainwater accumulates on the inner wall 3331 of the sealing element 333, and the sealing element 333 may fail after a long time. Consequently, sealing fails, and directional smoke discharging cannot be implemented. Therefore, the lower edge of the inner wall 3331 of the sealing element 333 is designed to be not lower than the lower edge of the smoke intake vent 331. When external rainwater enters, the rainwater may slide from the inner wall 3331 of the sealing element 333 to the smoke exhaust pipe, and then be discharged to the external environment through the air vent 339, thereby improving reliability of the energy storage cabinet 300.

In another example, the first side wall 334 includes a plurality of protrusion parts 3346 that face the outer wall 321 of the battery pack 320. For structures of the protrusion parts 3346, still refer to FIG. 24 and FIG. 25. Hollow structures are disposed in the protrusion parts 3346, a smoke intake vent is disposed on each protrusion part 3346, and a sum of a height of the protrusion part 3346 and a thickness of the sealing element 333 is greater than or equal to a height that is of the pressure relief valve and that protrudes from the outer wall 321 of the battery pack 320. A circumferential edge of the protrusion part 3346 abuts against the other end of the sealing element 333. The protrusion part 3346 and the sealing element 333 jointly form a smoke intake channel between the first side wall 334 and the outer wall 321 of the battery pack 320. The protrusion part 3346 is designed to better adapt to pressure relief valves that are of different models of battery packs 320 and that have different heights, thereby improving flexibility of the energy storage cabinet 300 and enriching application scenarios.

It should be noted that the protrusion part 3346 and the first side wall 334 may be an integrated part, and such a design can enhance firmness and sealing of the smoke exhaust pipe 330. **In** another example, the protrusion part 3346 and the first side wall 334 may alternatively be mutually independent components, and are fastened to each other in a manner of welding or the like.

In another example, for a structure of the energy storage cabinet 300, refer to FIG. 15. The smoke exhaust vent 332 may alternatively be disposed on the left wall 312 and the right wall 313 of the box 310, the left wall 312 and the right wall 313 of the energy storage cabinet are disposed parallel to each other along the y direction, and the box door and the rear side wall of the energy storage cabinet are disposed parallel to each other along the x direction. The smoke exhaust pipe 330 is located between the battery pack 320 and the rear side wall. When a cross section of the smoke exhaust pipe 330 is a square, the smoke exhaust pipe 330 includes four side walls that are sequentially connected, a first side wall 334 and a second side wall 335 are disposed parallel to each other along the x direction, and a third side wall 3303 and a fourth side wall 3304 are disposed parallel to each other along the y direction. In other words, the first side wall 334 is disposed parallel to the battery pack 320, and the second side wall 335 is disposed parallel to the rear wall. The smoke exhaust vent 332 may be disposed on the third side wall 3303 or the fourth side wall 3304, and correspondingly, the exhaust hole may be disposed on the left wall 312 or the right wall 313 of the box 310. A pipe is disposed between the exhaust hole and the smoke exhaust vent to implement communication between the exhaust hole and the smoke exhaust vent.

Based on a same inventive idea, an embodiment of this application further provides an energy storage system. The energy storage system includes the foregoing energy storage cabinet and a power converter. The power converter is configured to convert an alternating current output by an external alternating current power supply into a direct current and output the direct current to the energy storage cabinet, and/or the power converter is configured to convert a direct current output by the energy storage cabinet into an alternating current and output the alternating current to a load or a power grid.

Based on a same inventive idea, an embodiment of this application further provides a directional smoke exhaust assembly for an energy storage apparatus. The energy storage apparatus includes a plurality of battery packs, the directional smoke exhaust assembly includes a smoke exhaust pipe, a plurality of smoke intake vents are disposed on the smoke exhaust pipe, and the plurality of battery packs one-to-one correspond to the plurality of smoke intake vents. A pressure relief valve is disposed on each battery pack, and after the pressure relief valve of each battery pack is opened, each battery pack communicates with the smoke exhaust pipe. The directional smoke exhaust assembly may be located inside the energy storage apparatus, or may be located outside the energy storage apparatus. On the one hand, the smoke exhaust pipe may communicate with the battery pack inside the energy storage apparatus. On the other hand, the smoke exhaust pipe may be connected to a water tank. When thermal runaway occurs on a battery pack, high-temperature smoke generated by the battery pack may be transmitted to the water tank through the smoke exhaust pipe, to prevent smoke from gathering in the battery pack to cause a fire or explosion accident.

It is clear that a person skilled in the art can make various modifications and variations to this application without departing from the spirit and scope of this application. This application is intended to cover these modifications and variations of this application provided that they fall within the scope of the claims of this application and their equivalent technologies.

## Claims

1. An energy storage cabinet, comprising a box (1), battery modules (2), and a smoke exhaust pipe (4), wherein the battery modules (2) and the smoke exhaust pipe (4) are disposed in the box (1), and an exhaust vent (101) is disposed on the box (1); and
the battery modules (2) comprise module housings (201) and air conduits (206), the module housing (201) has a first mounting hole (2013), the air conduit (206) is disposed around an outer circumference of the first mounting hole (2013), the air conduit (206) communicates with a cavity of the module housing (201) by using the first mounting hole (2013), and the smoke exhaust pipe (4) communicates with the air conduit (206) and the exhaust vent (101).

2. The energy storage cabinet according to claim 1, wherein a plurality of second mounting holes (401) are disposed on the smoke exhaust pipe (4), the plurality of second mounting holes (401) one-to-one correspond to the plurality of battery modules (2), the plurality of second mounting holes (401) are disposed to respectively face the corresponding air conduits (206) of the battery modules (2), and the second mounting holes (401) communicate with the corresponding air conduits (206).

3. The energy storage cabinet according to claim 2, wherein a sealing element (402) is disposed between the air conduit (206) and the smoke exhaust pipe (4), the sealing element (402) is disposed around the second mounting hole (401), and the air conduit (206) presses the sealing element (402) against the smoke exhaust pipe (4).

4. The energy storage cabinet according to claim 2, wherein a limiting frame (403) is further disposed on the smoke exhaust pipe (4), the sealing element (402) is sheathed on an outer circumferential side of the limiting frame (403), and the air conduit (206) abuts against the limiting frame (403).

5. The energy storage cabinet according to claim 4, wherein a material of the limiting frame (403) is a mica plate or an epoxy plate.

6. The energy storage cabinet according to any one of claims 2 to 5, wherein the battery module (2) further comprises an explosion proof valve (203), and the explosion proof valve (203) of the battery module (2) is mounted in the first mounting hole (2013), or the explosion proof valve (203) is mounted in the second mounting hole (401).

7. The energy storage cabinet according to any one of claims 1 to 6, wherein an exhaust hole (404) is further disposed on the smoke exhaust pipe (4), and the exhaust hole (404) communicates with the exhaust vent (101).

8. The energy storage cabinet according to claim 7, wherein the exhaust hole (404) is a shutter hole, or a ventilation shutter is disposed for the exhaust hole (404).

9. The energy storage cabinet according to any one of claims 1 to 6, wherein a box door is disposed on the box (310), the box door is disposed parallel to a rear wall 311 of the box (310), the battery module (2) is a battery pack (320), there are a plurality of battery packs (320), the plurality of battery packs (320) are stacked, the smoke exhaust pipe (4) is a smoke exhaust pipe (330), the smoke exhaust pipe (330) is disposed between the rear wall (311) and the plurality of battery packs (320), and the smoke exhaust pipe (330) extends along a stacking direction of the plurality of battery packs (320).

10. The energy storage cabinet according to claim 9, wherein the second mounting holes (401) are smoke intake vents (331), the exhaust vent (101) is a smoke exhaust vent (332), an air vent (339) is disposed on the smoke exhaust pipe (330), and both the smoke exhaust vent (332) and the air vent (339) communicate with an external environment of the energy storage cabinet; and
the plurality of smoke intake vents (331) are spaced apart along the stacking direction of the plurality of battery packs, an pressure relief valve is disposed on an outer wall (321) that is of at least some battery packs in the plurality of battery packs and that faces the smoke exhaust pipe (330), a sealing element (333) is disposed between the pressure relief valve and the smoke intake vent (331), the sealing element (333) comprises two ends that are disposed parallel to each other along a direction of a spacing between the rear wall (311) and the box door, an opening at one end of the sealing element (333) covers an outer circumference of the pressure relief valve, and an opening at the other end of the sealing element (333) covers an outer circumference of the smoke intake vent (331).

11. The energy storage cabinet according to claim 10, wherein the smoke exhaust pipe (330) comprises two side walls disposed parallel to each other, one side wall (334) is disposed parallel to the outer wall (321) of the battery pack (320), and the other side wall (335) is located between the side wall (334) and the rear wall 311; and
the plurality of smoke intake vents (331) are disposed on the side wall (334), the plurality of smoke intake vents (331) one-to-one correspond to the plurality of battery packs (320), and the smoke exhaust vent (332) is disposed on the other side wall (335).

12. The energy storage cabinet according to claim 11, wherein there is a gap between the other side wall (335) and the rear wall 311, and the gap is filled with a flame retardant material.

13. The energy storage cabinet according to claim 11 or 12, wherein a lower edge of the smoke exhaust vent (332) is higher than an upper edge of a top smoke intake vent (331) in the plurality of smoke intake vents (331).

14. The energy storage cabinet according to any one of claims 11 to 13, wherein a plurality of exhaust holes (3111) are disposed in a partial region of the rear wall (311), and an orthographic projection of the partial region in the direction of the spacing between the rear wall (311) and the box door covers an orthographic projection of the smoke exhaust vent (332) in the direction of the spacing between the rear wall (311) and the box door.

15. The energy storage cabinet according to any one of claims 11 to 14, wherein a first baffle plate (336) is disposed between the rear wall (311) and the other side wall (335), and an orthographic projection of the first baffle plate (336) in the direction of the spacing between the rear wall (311) and the box door at least covers orthographic projections of the plurality of exhaust holes (3111) in the direction of the spacing between the rear wall (311) and the box door.

16. The energy storage cabinet according to claim 15, wherein a second baffle plate (337) is disposed at the smoke exhaust vent (332), and there is a partially overlapping region between orthographic projections of the first baffle plate (336) and the second baffle plate (337) in the direction of the spacing between the rear wall (311) and the box door.

17. The energy storage cabinet according to claim 16, wherein the first baffle plate (336) is fastened to a top wall of the box and inclined towards the rear wall (311), and the second baffle plate (337) is fastened to the lower edge of the smoke exhaust vent (332) and inclined towards the rear wall 311.

18. The energy storage cabinet according to claim 15, wherein the first baffle plate (336) is disposed parallel to the rear wall 311, a plurality of through holes are disposed on the first baffle plate (336), and the plurality of through holes do not overlap the plurality of exhaust holes (3111).

19. The energy storage cabinet according to any one of claims 11 to 18, wherein the smoke exhaust pipe (330) comprises a bottom wall, the two side walls are perpendicular to the bottom wall, and sealing components (3341) are disposed between the bottom wall and bottom surfaces that are of the two side walls and that face the bottom wall; and
the air vent (339) is disposed on the bottom wall, and the air vent (339) is located between the two sealing components (3341).

20. The energy storage cabinet according to any one of claims 11 to 19, wherein the side wall (334) comprises a plurality of protrusion parts (3346) that face the outer wall (321) of each battery pack (320), hollow structures are disposed in the protrusion parts (3346), the smoke intake vent (331) is disposed on each protrusion part (3346), and a sum of a height of the protrusion part (3346) and a thickness of the sealing element (333) is greater than or equal to a height that is of the pressure relief valve and that protrudes from the outer wall (321) of the battery pack (320); and
a circumferential edge of the protrusion part (3346) abuts against the other end of the sealing element (333).

21. The energy storage cabinet according to claim 10, wherein the smoke exhaust pipe (330) comprises a side wall, the side wall is located between the rear wall 311 and the outer wall (321) of the battery pack (320), the plurality of smoke intake vents (331) are disposed on the side wall, and the smoke exhaust vent (332) is disposed on the rear wall 311.

22. The energy storage cabinet according to claim 21, wherein a baffle plate (3342) is disposed between the smoke exhaust vent (332) and the side wall, and an included angle between the baffle plate (3342) and the side wall is an acute angle.

23. The energy storage cabinet according to claim 21 or 22, wherein the side wall is perpendicular to a bottom wall of the smoke exhaust pipe (330), and a sealing component (3341) is disposed between the bottom wall and a bottom surface that is of the side wall and that faces the bottom wall; and
the air vent (339) is disposed on the bottom wall, and the air vent (339) is located between the rear wall (311) and the sealing component (3341).

24. The energy storage cabinet according to claim 21 or 22, wherein the rear wall (311) is perpendicular to a bottom wall of the smoke exhaust pipe (330), and the air vent (339) is disposed in a region above a junction between the rear wall 311 and the bottom wall.

25. The energy storage cabinet according to claim 10, wherein the smoke exhaust pipe (330) comprises a top wall (3302), a bottom wall (3301), and a side wall, the bottom wall (3301) and the top wall (3302) are disposed parallel to each other, the bottom wall (3301) and the top wall (3302) intersect with the side wall, the side wall is disposed parallel to the outer wall (321) of the battery pack (320), the plurality of smoke intake vents (331) are disposed on the side wall, the smoke exhaust vent (332) is disposed on the top wall (3302), and the air vent (339) is disposed on the bottom wall (3301).

26. The energy storage cabinet according to any one of claims 10 to 25, wherein the other end of the sealing element (333) comprises an inner wall and an outer wall that are disposed opposite to each other, the inner wall is disposed to face the smoke intake vent (331), and a lower edge of the inner wall of the sealing element (333) and a lower edge of the smoke intake vent (331) are on a same horizontal plane, or a lower edge of the inner wall of the sealing element (333) is higher than a lower edge of the smoke intake vent (331).

27. The energy storage cabinet according to any one of claims 1 to 26, wherein the pressure relief valve protrudes from a surface of the outer wall (321) of the battery pack (320), and a part that is of the pressure relief valve and that protrudes from the surface of the outer wall (321) of the battery pack (320) is located in the air conduit (206).

28. The energy storage cabinet according to any one of claims 1 to 27, wherein the battery module (2) comprises electrochemical cells (202) and a partition plate (204), the electrochemical cells (202) and the partition plate (204) are disposed in the module housing (201), the partition plate (204) divides the cavity of the module housing (201) into a heat dissipation cavity (2011) and a smoke exhaust cavity (2012), and the air conduit (206) communicates with the smoke exhaust cavity (2012) by using the first mounting hole (2013).

29. The energy storage cabinet according to claim 28, wherein the electrochemical cell (202) comprises a body (2022), and the body (2022) is disposed in the heat dissipation cavity (2011).

30. The energy storage cabinet according to claim 29, wherein the electrochemical cell (202) further comprises a tab (2023) and an pressure relief valve (2021), the tab (2023) and the pressure relief valve (2021) are disposed on the body (2022), and the tab (2023) and the pressure relief valve (2021) penetrate the partition plate (204) to extend to the smoke exhaust cavity (2012).

31. The energy storage cabinet according to claim 30, wherein avoidance holes (2041) are disposed on the partition plate (204), and the tab (2023) and the pressure relief valve (2021) of each electrochemical cell (202) extend to the smoke exhaust cavity (2012) through a corresponding avoidance hole (2041).

32. The energy storage cabinet according to claim 31, wherein the avoidance holes (2041) are disposed in one-to-one correspondence with the electrochemical cells (202); the energy storage cabinet further comprises sealing elements (205), the sealing elements (205) are disposed in one-to-one correspondence with the electrochemical cells (202), and each sealing element (205) is disposed around the tab (2023) and the pressure relief valve (2021) of the corresponding electrochemical cell (202); and
each second sealing element (205) abuts against the body (2022) of the corresponding electrochemical cell (202) and the partition plate (204).

33. The energy storage cabinet according to claim 32, wherein one avoidance hole (2041) is disposed on the partition plate (204) to separately correspond to each tab (2023) and each pressure relief valve (2021) of each electrochemical cell (202); and
the energy storage cabinet further comprises sealing elements (205), and the sealing elements (205) are disposed in one-to-one correspondence with the avoidance holes (2041); and each sealing element (205) is disposed around a corresponding tab (2023) or pressure relief valve (2021), and each sealing element (205) abuts against the body (2022) of the corresponding electrochemical cell (202) and the partition plate (204).

34. The energy storage cabinet according to any one of claims 1 to 33, wherein the smoke exhaust pipe (4) and the box (1) are an integrated structure.

35. The energy storage cabinet according to any one of claims 1 to 34, wherein a fire retardant cooling apparatus is disposed in the air conduit (206), and the fire retardant cooling apparatus comprises a plurality of alternately disposed baffle plates (2061); or the fire retardant cooling apparatus comprises a plurality of spherical particles (2062); or the fire retardant cooling apparatus comprises a plurality of stacked steel wire meshes (2063), and mesh holes of two adjacent steel wire meshes (2063) are different.

36. A power-consuming apparatus, comprising power-consuming equipment and the energy storage cabinet according to any one of claims 1 to 35, wherein the power-consuming equipment is electrically connected to the energy storage cabinet, and the energy storage cabinet is configured to supply power to the power-consuming equipment.

37. An energy storage system, wherein the energy storage system comprises the energy storage cabinet according to any one of claims 1 to 35 and a power converter; and the power converter is configured to convert an alternating current output by an external alternating current power supply into a direct current and output the direct current to the energy storage cabinet, and/or the power converter is configured to convert a direct current output by the energy storage cabinet into an alternating current and output the alternating current to a load or a power grid.
